# EUROPEAN PATENT APPLICATION

(11) **EP 2 915 708 A1**
(43) Date of publication of application: **09.09.2015**
(21) Application number: 12887523.4
(22) Date of filing: 30.10.2012
(51) Int. Cl.: B60T 8/00, B60T 13/66, B60T 17/22

(54) **VEHICLE BRAKE CONTROL DEVICE**

(71) Applicant: TOYOTA JIDOSHA KABUSHIKI KAISHA, Toyota-shi, Aichi-ken, 471-8571 (JP)
(72) Inventor: MIYAZAKI Tetsuya, Toyota-shi Aichi 471-8571 (JP); NIMURA Kazunori, Toyota-shi Aichi 471-8571 (JP)
(74) Representative: Winter, Brandl, Fürniss, Hübner, Röss, Kaiser, Polte - Partnerschaft mbB
(86) International application number: PCT/JP2012/077994
(87) International publication number: WO 2014/068658

(57) **Abstract**

A brake control device includes a front-wheel left-right communication passage 61 that allows communication between wheel cylinders 82 for a front-left wheel and a front-right wheel via a front-wheel communication on-off valve 64; a rear-wheel left-right communication passage 62 that allows communication between wheel cylinders 82 for a rear-left wheel and a rear-right wheel via a rear-wheel communication on-off valve 65; and a front-rear communication passage 63 that allows communication between a wheel cylinder 82 of either one of the front-left and front-right wheels and a wheel cylinder 82 of either one of the rear-left and rear-right wheels via a front-rear communication on-off valve 66, wherein the brake control device keeps the front-wheel communication on-off valve 64, the rear-wheel communication on-off valve 65, and the front-rear communication on-off valve 66 opened to set a mode to a four-wheel communication mode during a normal brake control. With this, some of linear control valves 44 (45) are deactivated, whereby an operating noise can be reduced.

## Description

### TECHNICAL FIELD

The present invention relates to a vehicle brake control device that can independently control a hydraulic pressure of each of front-left, front-right, rear-left, and rear-right wheels by using a linear control valve.

### BACKGROUND ART

Conventionally, as proposed in Patent Document 1, there has been known a vehicle brake control device including linear control valves (composed of a pressure-increasing linear control valve and a pressure-decreasing linear control valve), each of which is provided on an individual passage for operating fluid from a power hydraulic pressure generating device to each wheel cylinder, the brake control device independently controlling a hydraulic pressure of a wheel cylinder for each wheel according to an energization control of the linear control valves. In the brake control device controlling the hydraulic pressure of the wheel cylinder for each wheel, a target hydraulic pressure according to a driver's brake operation is set, the hydraulic pressure of each wheel cylinder is detected, and the energization control of the linear control valve according to a deviation between the target hydraulic pressure and the detected hydraulic pressure is independently performed for each wheel. In a normal brake control in which an ABS control or a vehicle behavior control is not performed, the target hydraulic pressure of each wheel cylinder is set to the same value according to the brake operation.

### PRIOR ART DOCUMENT

### PATENT DOCUMENT

Patent Document 1: Japanese Patent Application Laid-Open (kokai) No. 2011-183921

### SUMMARY OF THE INVENTION

However, such brake control device has a problem of an operating noise of the linear control valve that provides uncomfortable feeling to a driver. This operating noise is generated due to a hydraulic pulsation that occurs at the moment the linear control valve is opened. Especially, the brake control device that can independently control hydraulic pressures of wheel cylinders for front-left, front-right, rear-left, and rear-right wheels includes four pressure-increasing linear control valves and four pressure-decreasing linear control valves. These linear control valves are individually activated, resulting in that much operating noise is generated, and a countermeasure against the operating noise is demanded.

The present invention is accomplished to solve the above problem, and aims to enhance quietness upon a hydraulic control of a wheel cylinder.

According to an aspect of the present invention for solving the above problem, a vehicle brake control device includes: wheel cylinders (82), each of which is provided to each of front-left, front-right, rear-left, and rear-right wheels for receiving a hydraulic pressure of operating fluid to apply braking force to the wheels; a power hydraulic pressure generating device (30) that generates a hydraulic pressure even if a brake operation is not performed; individual linear control valve devices (50), each of which is provided to an individual passage (43) of operating fluid leading into each of the wheel cylinders from the power hydraulic pressure generating device for independently adjusting a hydraulic pressure of each of the wheel cylinders; a hydraulic pressure sensor (53) that detects a hydraulic pressure of each of the wheel cylinders; and a hydraulic control unit (100) that controls energization of the individual linear control valve devices to control the hydraulic pressure of each of the wheel cylinders,
the brake control device including: a front-wheel left-right communication passage (61) that allows communication between the individual passage (43FL), which is located between the wheel cylinder for the front-left wheel and the individual linear control valve device, and the individual passage (43FR), which is located between the wheel cylinder for the front-right wheel and the individual linear control valve device, via a front-wheel communication on-off valve (64);
a rear-wheel left-right communication passage (62) that allows communication between the individual passage (43RL), which is located between the wheel cylinder for the rear-left wheel and the individual linear control valve device, and the individual passage (43RR), which is located between the wheel cylinder for the rear-right wheel and the individual linear control valve device, via a rear-wheel communication on-off valve (65);
a front-rear communication passage (63) that allows communication between the individual passage (43FR), which is located between the wheel cylinder of either one of the front-left and front-right wheels and the individual linear control valve device, and the individual passage (43RL), which is located between the wheel cylinder of either one of the rear-left and rear-right wheels and the individual linear control valve device, via a front-rear communication on-off valve (66); and
a communication control unit (S13) that keeps the front-wheel communication on-off valve, the rear-wheel communication on-off valve, and the front-rear communication on-off valve opened to allow the wheel cylinders for the front-left, front-right, rear-left, and rear-right wheels to be communicated with one another during a normal brake control that is a brake mode in the case where no abnormality is detected in the brake control device, and a target hydraulic pressure of the wheel cylinder for each of the front-left, front-right, rear-left, and rear-right wheels is set to be the same value.

In the present invention, the individual linear control valve device is provided on the individual passage leading into the wheel cylinder of each of the front-left, front-right, rear-left, and rear-right wheels from the power hydraulic pressure generating device. The individual linear control valve device adjusts the hydraulic pressure generated by the power hydraulic pressure generating device, and supplies the adjusted hydraulic pressure to the wheel cylinder. The hydraulic control unit controls the energization of the individual linear control valve device based on the hydraulic pressure detected by the hydraulic pressure sensor, thereby controlling the hydraulic pressure of each wheel cylinder. Further, the present invention includes the front-wheel left-right communication passage, the rear-wheel left-right communication passage, and the front-rear communication passage, these passages allowing the wheel cylinders for the front-left, front-right, rear-left, and rear-right wheels to be communicated with one another.

The front-wheel left-right communication passage allows the communication between the individual passage, which is located between the wheel cylinder for the front-left wheel and the individual linear control valve device, and the individual passage, which is located between the wheel cylinder for the front-right wheel and the individual linear control valve device, via the front-wheel communication on-off valve. The "individual passage located between the wheel cylinder for the front-left wheel and the individual linear control valve device" means the individual passage located between the wheel cylinder for the front-left wheel and the individual linear control valve device for adjusting the hydraulic pressure of the wheel cylinder for the front-left wheel. The same applies to the individual passages between the wheel cylinders for the other wheels and the individual linear control valve device.

The rear-wheel left-right communication passage allows the communication between the individual passage, which is located between the wheel cylinder for the rear-left wheel and the individual linear control valve device, and the individual passage, which is located between the wheel cylinder for the rear-right wheel and the individual linear control valve device, via the rear-wheel communication on-off valve.

The front-rear communication passage allows the communication between the individual passage, which is located between the wheel cylinder of either one of the front-left and front- right wheels and the individual linear control valve device, and the individual passage, which is located between the wheel cylinder of either one of the rear-left and rear-right wheels and the individual linear control valve device, via the front-rear communication on-off valve. The front-rear communication passage is not limited to one, but two passages may be formed. For example, a communication passage that allows communication between the individual passage, which is located between the wheel cylinder for the other one of the front-left and front-right wheels and the individual linear control valve device, and the individual passage, which is located between the wheel cylinder for the other one of the rear-left and rear-right wheels and the individual linear control valve device, via the front-rear communication on-off valve may be additionally provided.

The communication control unit keeps the front-wheel communication on-off valve, the rear-wheel communication on-off valve, and the front-rear communication on-off valve opened to allow the wheel cylinders for the front-left, front-right, rear-left, and rear-right wheels to be communicated with one another during a normal brake control that is a brake mode in the case where no abnormality is detected in the brake control device, and a target hydraulic pressure of the wheel cylinder for each of the front-left, front-right, rear-left, and rear-right wheels is set to be the same value. During the normal brake control, the target hydraulic pressure of the wheel cylinder for each wheel is set to be the same value. Therefore, when the wheel cylinders for the respective wheels are communicated with one another, all of the individual linear control valve devices are not necessarily activated, and some of them can be deactivated.

As a result, the present invention can reduce an occurrence of an operating noise of the individual linear control valve device, thereby being capable of enhancing quietness during the normal brake control. The communication control unit is not limited to the one that allows the wheel cylinders for the front-left, front-right, rear-left, and rear-right wheels to be communicated with one another only during a normal brake control, but may be the one that allows the wheel cylinders for the front-left, front-right, rear-left, and rear-right wheels to be communicated with one another at least during a normal brake control. Accordingly, the present invention may include the configuration in which the communication control unit allows the wheel cylinders for the front-left, front-right, rear-left, and rear-right wheels to be communicated with one another, even when abnormality is detected in the brake control device.

According to another aspect of the present invention, the front-rear communication passage allows communication between the individual passages, each of the individual passages being located between the wheel cylinder for the wheel that is diagonal to the other wheel and the individual linear control valve device.

In the present invention, the front-rear communication passage allows communication between the individual passages with each other, each of the individual passages being located between the wheel cylinder for the wheel that is diagonal to the other wheel and the individual linear control valve device. For example, the individual passage between the wheel cylinder for the front-right wheel and the individual linear control valve device and the individual passage between the wheel cylinder for the rear-left wheel and the individual linear control valve device are communicated with each other via the front-rear communication on-off valve. Alternatively, the individual passage between the wheel cylinder for the front-left wheel and the individual linear control valve device and the individual passage between the wheel cylinder for the rear-right wheel and the individual linear control valve device are communicated with each other via the front-rear communication on-off valve.

When the wheel cylinders for the right wheels (front-right wheel and the rear-right wheel) or the wheel cylinders for the left wheels (front-left wheel and the rear-left wheel) are communicated by the communication passage, a difference may be generated in the hydraulic pressure of the wheel cylinder between the left and right wheels in the case where the change in the target hydraulic pressure is large or operating fluid has high viscosity (at low temperature). On the other hand, in the present invention, the wheel cylinders for the diagonal wheels are communicated with each other with the front-rear communication passage, whereby the occurrence of the difference between the hydraulic pressures of the wheel cylinders for the left and right wheels can be suppressed.

According to another aspect of the present invention, the hydraulic control unit (S20 to S23) deactivates some of the individual linear control valve devices, and activates the remaining individual linear control valve devices during the normal brake control, upon controlling the hydraulic pressure of each wheel cylinder.

In the present invention, the wheel cylinders for the front-left, front-right, rear-left, and rear-right wheels are communicated with one another during the normal brake control. Therefore, if any of the individual linear control valve devices are activated, the hydraulic pressures of the respective wheel cylinders can simultaneously be increased or decreased. In view of this, in the present invention, the hydraulic control unit deactivates some of the individual linear control valve devices, and activates the remaining individual linear control valve devices to control the hydraulic pressures of the respective wheel cylinders. This configuration can reduce the generation of operating noise from the individual linear control valve devices. In addition, since the number of the wheel cylinders to be controlled is increased relative to the number of the individual linear control valve devices to be activated, the amount of the operating fluid absorbing the pulsation generated in the operating fluid upon opening the valves increases, whereby the loudness of the operating noise ca be reduced. Consequently, quietness during the normal brake control can be enhanced. In the case where each of the individual linear control valve devices is composed of a pressure-increasing linear control valve and a pressure-decreasing linear control valve, the situation in which "some of the individual linear control valve devices are deactivated" means the configuration in which some of the pressure-increasing linear control valves are deactivated, the configuration in which some of the pressure-decreasing linear control valves are deactivated, and the configuration in which some of the pressure-increasing linear control valves and some of the pressure-decreasing linear control valves are deactivated.

According to another aspect of the present invention, the hydraulic control unit (S20 to S23) changes the individual linear control valve device to be activated.

In the present invention, the individual linear control valve device to be activated is changed, whereby the life of all individual linear control valve devices can be prolonged.

According to another aspect of the present invention, the hydraulic control unit (S23) selects the individual linear control valve device to be activated in order that a number of activation or an activation time of each of the individual linear control valve devices is equalized.

According to the present invention, the number of activation or the activation time of each of the individual linear control valve devices is equalized, with the result that the life of all individual linear control valve devices can more appropriately be prolonged. In the case where each of the individual linear control valve devices is composed of a pressure-increasing linear control valve and a pressure-decreasing linear control valve, the individual linear control valve device to be activated may be selected in order that the number of activation or the activation time is equalized for only the pressure-increasing linear control valve, only the pressure-decreasing linear control valve, or both the pressure-increasing linear control valve and the pressure-decreasing linear control valve.

According to another aspect of the present invention, the brake control device further includes a status determination unit (S21) that determines whether or not a driver is in a status where he/she can easily hear the operating noise generated from the individual linear control valve devices, wherein the hydraulic control unit (S22) changes the individual linear control valve device to be activated to an individual linear control valve device that is set beforehand and that is difficult to generate an operating noise, when the status determination unit determines that the driver is in the status where he/she can easily hear the operating noise.

There are linear control valves that are likely to generate an operating noise at the moment they are opened, and linear control valves that is difficult to generate an operating noise at the moment they are opened. The likelihood of generating an operating noise at the moment valves are opened may be different depending on a communication passage communicated with a linear control valve. In view of this, in the present invention, the status determination unit determines whether or not a driver is in a status where he/she can easily hear the operating noise generated from the individual linear control valve devices. For example, the status determination unit determines that the driver is in the status where he/she can easily hear the operating noise generated from the individual linear control valve devices, when a speed of a vehicle is lower than a reference speed set beforehand. When the status determination unit determines that the driver is in the status where he/she can easily hear the operating noise, the hydraulic control unit changes the individual linear control valve device to be activated to an individual linear control valve device that is set beforehand and that is difficult to generate an operating noise. Consequently, the present invention can reduce uncomfortable feeling provided to the driver caused by the activation of the individual linear control valve devices.

According to another aspect of the present invention, the hydraulic control unit (S25) acquires a common hydraulic pressure of each wheel cylinder by using a detection value of any one or more of hydraulic pressure sensors detecting hydraulic pressures of the respective wheel cylinders, and controls the hydraulic pressure of each wheel cylinder based on the common hydraulic pressure.

In the present invention, since the respective wheel cylinders are communicated with one another during the normal brake control, the hydraulic pressures of the respective wheel cylinders become almost the same. Therefore, in the present invention, the hydraulic control unit acquires a common hydraulic pressure of each wheel cylinder by using a detection value of any one or more of hydraulic pressure sensors detecting hydraulic pressures of the respective wheel cylinders, and controls the hydraulic pressure of each wheel cylinder based on the common hydraulic pressure. For example, the hydraulic control unit may calculate an average of the detection values of any two or more of the hydraulic pressure sensors, and use this average as a common hydraulic pressure. Alternatively, the hydraulic control unit may calculate an average of detection values of any two or more of the hydraulic pressure sensors, excluding the maximum value and the minimum value of the detection values, and use this average as a common hydraulic pressure. In this way, the hydraulic control unit may acquire a common hydraulic pressure by combining the detection values of the hydraulic pressure sensors. Accordingly, a more appropriate common hydraulic pressure can be acquired by using the detection values of the plural hydraulic pressure sensors. In addition, it is not necessary to use the hydraulic pressure sensor of the wheel that is the same for the individual linear control valve device to be activated. Accordingly, a detection value of the most optimum hydraulic pressure sensor can be selected to be used.

According to another aspect of the present invention, the communication control unit (S13, S14) keeps the wheel cylinders for the front-left, front-right, rear-left, and rear-right wheels communicated with one another, when a four-wheel communication allowable condition is established, even though abnormality is detected in the brake control device.

In the present invention, the wheel cylinders for the front-left, front-right, rear-left, and rear-right wheels are kept communicated with one another, when no abnormality is detected in the brake control device. However, the brake control device has a status in which, even if abnormality is detected, the function of the abnormal portion can be compensated by keeping the communication state described above. For example, when some of the individual linear control valve devices are in failure, the hydraulic pressure of each wheel cylinder can appropriately be adjusted with the individual linear control valve devices that are not in failure by keeping the communication state among the wheel cylinders for the front-left, front-right, rear-left, and rear-right wheels. When some hydraulic pressure sensors are in failure, the hydraulic pressure of each wheel cylinder can be detected with the hydraulic pressure sensors that are not in failure by keeping the communication state among the wheel cylinders of the front-left, front-right, rear-left, and rear-right wheels. In view of this, in the present invention, the communication control unit keeps the wheel cylinders for the front-left, front-right, rear-left, and rear-right wheels communicated with one another, when a four-wheel communication allowable condition is established, even though abnormality is detected in the brake control device. With this, the hydraulic control for each wheel cylinder by the hydraulic control unit can be continued. Thus, the present invention can enhance capability to cope with failure.

According to another aspect of the present invention, the four-wheel communication allowable condition is a status in which, even when abnormality is detected in some of the individual linear control valve devices, the hydraulic pressure of each wheel cylinder can be controlled by the activation of the remaining individual linear control valve devices.

In the present invention, under the status in which, even when abnormality is detected in some of the individual linear control valve devices out of the individual linear control valve devices for four wheels, the hydraulic pressure of each wheel cylinder can be controlled by the activation of the remaining individual linear control valve devices, the communication control unit keeps the wheel cylinders of the front-left, front-right, rear-left, and rear-right wheels communicated with one another. With this configuration, the hydraulic control unit can continue the hydraulic control for each wheel cylinder by using the individual linear control valve devices from which abnormality is not detected. Thus, the present invention can enhance capability to cope with failure of the individual linear control valve devices.

According to another aspect of the present invention, the four-wheel communication allowable condition is a status in which, even when abnormality is detected in some of the hydraulic pressure sensors, the common hydraulic pressure of each wheel cylinder can be detected with the remaining hydraulic pressure sensors.

In the present invention, under the status in which, even when abnormality is detected in some of the hydraulic pressure sensors out of four hydraulic pressure sensors detecting the hydraulic pressures of the respective wheel cylinders, the common hydraulic pressure of each wheel cylinder can be detected by the remaining hydraulic pressure sensors, the communication control unit keeps the wheel cylinders for the front-left, front-right, rear-left, and rear-right wheels communicated with one another. With this, the hydraulic control unit can continue the hydraulic control for each wheel cylinder with the hydraulic pressure sensors from which abnormality is not detected. Thus, the present invention can enhance capability to cope with failure of the hydraulic pressure sensors.

According to another aspect of the present invention, the brake control device includes: a master cylinder (20) that generates a first pedal effort hydraulic pressure and a second pedal effort hydraulic pressure by using a pedal effort caused by a driver's depressing operation on a brake pedal; a master hydraulic path including a first pedal effort hydraulic pressure path (23) that supplies the first pedal effort hydraulic pressure to the wheel cylinder for either one of the front-left and front- right wheels, and a second pedal effort hydraulic pressure path (24) that supplies the second pedal effort hydraulic pressure to the wheel cylinder for the other front wheel; a master cut valve device (46, 47) that includes a first on-off valve (46) opening and closing the first pedal effort hydraulic path, and a second on-off valve (47) opening and closing the second pedal effort hydraulic path, the first on-off valve and the second on-off valve being a normally opened valve that keeps opened upon non-energization and is closed by energization; and a master cut valve closing control unit (S31) that keeps the first on-off valve and the second on-off valve of the master cut valve device closed not only during the period in which the hydraulic control unit controls the hydraulic pressure of each wheel cylinder according to the brake pedal operation, but also during the period in which the brake pedal operation is canceled.

The present invention is configured such that, when abnormality occurs in the brake control device, the energization of the master cut valve device is shut off, whereby the hydraulic pressure can be supplied to the wheel cylinders for the front-left and front-right wheels by the pedal effort caused by the driver's depressing operation on the brake pedal. During a normal brake control, the master cut valve closing control unit keeps the first on-off valve and the second on-off valve in the master cut valve device closed. With this, the hydraulic control unit adjusts the hydraulic pressure outputted from the power hydraulic pressure generating device by the individual linear control valve device, and supplies the adjusted hydraulic pressure to each wheel cylinder. When the brake pedal operation is canceled, the hydraulic control by the hydraulic control unit is ended, but the master cut valve closing control unit keeps the first on-off valve and the second on-off valve in the master cut valve device closed.

In a conventional brake control device including, in a switchable manner, a power hydraulic pressure path that adjusts a power hydraulic pressure and supplies the adjusted hydraulic pressure, and a pedal effort hydraulic pressure path that supplies a hydraulic pressure generated by a pedal effort of a driver, an on-off valve provided on the pedal effort hydraulic path is opened every time the brake pedal operation is canceled. Therefore, an operating noise upon opening the on-off valve is generated, every time the brake pedal operation is canceled. On the other hand, in the present invention, the first on-off valve and the second on-off valve in the master cut valve device are kept closed even during the period in which the brake pedal operation is canceled, whereby the operating noise generated in the conventional device is not generated. Thus, the present invention can further enhance quietness.

According to another aspect of the present invention, each of the individual linear control valve devices for adjusting the hydraulic pressures of the wheel cylinders for the front-left and front-right wheels include a normally closed pressure-decreasing linear control valve (45FL, 45FR) that is opened to allow communication between the wheel cylinder and a waste fluid path (42) upon energization, and that keeps closed to shut off the communication upon non-energization, each of the individual linear control valve devices for adjusting the hydraulic pressures of the wheel cylinders for the rear-left and rear-right wheels include a normally opened pressure-decreasing linear control valve (45RL, 45RR) that keeps opened to allow communication between the wheel cylinder and the waste fluid path (42) upon non-energization, and that is closed to shut off the communication upon energization, and the communication control unit (S30) keeps the wheel cylinders for the front-left, front-right, rear-left, and rear-right wheels communicated with one another, even when the brake pedal operation is canceled.

In the present invention, the pressure-decreasing linear control valves for adjusting the hydraulic pressures of the wheel cylinders for the front-left and front-right wheels are a normally closed valve. Therefore, when abnormality occurs in the brake control device, pedal effort hydraulic pressure can surely be supplied to the wheel cylinders for the front-left and front-right wheels. In the configuration described above, when the brake pedal operation is canceled to end the hydraulic control, the operating fluid of the wheel cylinders for the front-left and front-right wheels cannot be released from the pressure-decreasing linear control valve, and further, since the first on-off valve and the second on-off valve of the master cut valve device are kept closed by the master cut valve closing control unit, the operating fluid of the wheel cylinders cannot be returned to the master cylinder.

In view of this, in the present invention, the communication control unit keeps the wheel cylinders for the front-left, front-right, rear-left, and rear-right wheels communicated with one another even when the brake pedal operation is canceled. With this, the wheel cylinders for the front-left and front-right wheels are communicated with the waste liquid path via the front-rear communication passage and the normally opened pressure-decreasing linear control valves for adjusting the hydraulic pressures of the wheel cylinders for the rear-left and rear-right wheels. As a result, even when the first on-off valve and the second on-off valve of the master cut valve device are kept closed, the hydraulic pressures of the wheel cylinders for the front-left and front-right wheels can be reduced to a pressure equal to or lower than a predetermined hydraulic pressure, whereby overheat of the brake caliper can be prevented.

Notably, the expression of "the individual linear control valve device for adjusting the hydraulic pressure of the wheel cylinder for the ** wheel" is used only for specifying the individual linear control valve device, and this expression represents the individual linear control valve device for adjusting the hydraulic pressure of the wheel cylinder for the ** wheel under the condition in which the respective wheel cylinders are not communicated with one another. The same applies below.

According to another aspect of the present invention, the brake control device includes, separate from the communication control unit, a pressure-decrease control upon pedal-cancel unit (S40) that decreases the hydraulic pressures of the wheel cylinders for the front-left and front-right wheels, when the brake pedal operation is canceled.

When the brake pedal operation is canceled, the hydraulic pressures of the wheel cylinders for the front-left and front-right wheels can be decreased by the communication passage. However, in the present invention, the pressure-decrease control upon pedal-cancel unit decreases the hydraulic pressures of the wheel cylinders for the front-left and front-right wheels, separate from the communication control unit. Accordingly, even under the situation in which the hydraulic pressure is difficult to be decreased only by the communication passage due to the influence of passage resistance of the communication on-off valve, the hydraulic pressures of the wheel cylinders for the front-left and front-right wheels can surely be reduced, whereby overheat of the brake caliper can be prevented.

According to another aspect of the present invention, the pressure-decrease control upon pedal-cancel unit (S404) temporarily opens at least one of the pressure-decreasing linear control valves for adjusting the hydraulic pressures of the wheel cylinders for the front-left and front-right wheels, when the brake pedal operation is canceled.

In the present invention, the pressure-decrease control upon pedal-cancel unit temporarily opens at least one of the pressure-decreasing linear control valves for adjusting the hydraulic pressures of the wheel cylinders for the front-left and front-right wheels, when the brake pedal operation is canceled. Accordingly, the pressure decrease caused by opening the normally closed pressure-decreasing linear control valve can be exerted in addition to the pressure decrease caused by using the front-rear communication passage, whereby the hydraulic pressures of the wheel cylinders for the front-left and front-right wheels can quickly be reduced to a pressure equal to or lower than a predetermined hydraulic pressure.

According to another aspect of the present invention, the pressure-decrease control upon pedal-cancel unit alternately opens the pressure-decreasing linear control valve for adjusting the hydraulic pressure of the wheel cylinder for the front-left wheel and the pressure-decreasing linear control valve for adjusting the hydraulic pressure of the wheel cylinder for the front-right wheel.

The normally closed pressure-decreasing linear control valve is opened due to energization of its solenoid, and in this case, the solenoid generates heat. In view of this, in the present invention, the pressure-decreasing linear control valve for adjusting the hydraulic pressure of the wheel cylinder for the front-left wheel and the pressure-decreasing linear control valve for adjusting the hydraulic pressure of the wheel cylinder for the front-right wheel are alternately opened, whereby the hydraulic pressures of the wheel cylinders for the front-left and front-right wheels can be decreased, while suppressing the heat generation of the solenoid.

According to another aspect of the present invention, the pressure-decrease control upon pedal-cancel unit (S412 to S415) estimates the temperature of the pressure-decreasing linear control valve that is opened, and when the estimated temperature exceeds an overheat prevention threshold value, the pressure-decrease control upon pedal-cancel unit takes priority over the master cut valve closing control unit to open at least one of on-off valves of the master cut valve device.

In the present invention, the pressure-decrease control upon pedal-cancel unit estimates the temperature of the pressure-decreasing linear control valve that is opened, and when the estimated temperature exceeds an overheat prevention threshold value, the pressure-decrease control upon pedal-cancel unit takes priority over the master cut valve closing control unit (the activation of the master cut valve closing control unit is stopped) to open at least one of on-off valves of the master cut valve device. With this control, the hydraulic pressure remaining in the wheel cylinder can be released to the master cylinder, and overheat of the pressure-decreasing linear control valve can be prevented by stopping the energization of the pressure-decreasing linear control valve. The temperature of the pressure-decreasing linear control valve can be estimated based on the history of a value of current applied to the solenoid (e.g., an integrated value of a target current value).

According to another aspect of the present invention, the brake control device includes a remaining hydraulic pressure state detection unit (S401, 402) that detects a remaining hydraulic pressure state that is a state in which the hydraulic pressures of the wheel cylinders for the front-left and front-right wheels are not reduced to the predetermined hydraulic pressure after the brake pedal operation is canceled, wherein the pressure-decrease control upon pedal-cancel unit decreases the hydraulic pressures of the wheel cylinders for the front-left and front-right wheels when the remaining hydraulic pressure state is detected.

In the present invention, after the brake pedal operation is canceled, the remaining hydraulic pressure state detection unit detects the remaining hydraulic pressure state in which the hydraulic pressures of the wheel cylinders for the front-left and front-right wheels are not reduced to the predetermined hydraulic pressure. For example, the remaining hydraulic pressure state detection unit detects the remaining hydraulic pressure state based on whether or not the detection value detected by the hydraulic pressure sensor upon the completion of the hydraulic control due to the cancel of the brake pedal operation is larger than a remaining hydraulic pressure determination threshold value. When the hydraulic pressure detection value is larger than the remaining hydraulic pressure determination threshold value, the remaining hydraulic pressure state detection unit determines that it is the remaining hydraulic pressure state. The pressure-decrease control upon pedal-cancel unit decreases the hydraulic pressures of the wheel cylinders for the front-left and front-right wheels, when the remaining hydraulic pressure state is detected. Consequently, according to the present invention, the pressure-decrease control upon pedal-cancel unit can be exerted under a more appropriate condition.

According to another aspect of the present invention, the pressure-decrease control upon pedal-cancel unit (S415, S423) takes priority over the master cut valve closing control unit to open at least one of on-off valves of the master cut valve device, when the remaining hydraulic pressure state is detected.

In the present invention, the pressure-decrease control upon pedal-cancel unit takes priority over the master cut valve closing control unit (the activation of the master cut valve closing control unit is stopped) to open at least one of on-off valves of the master cut valve device, when the remaining hydraulic pressure state of the wheel cylinders for the front-left and front-right wheels is detected by the remaining hydraulic pressure state detection unit after the brake pedal operation is canceled. With this control, the wheel cylinders for the front-left and front-right wheels and the master cylinder are communicated with each other, whereby the hydraulic pressure remaining in the wheel cylinder can be released to the master cylinder. In this case, it is preferable to open the on-off valve of the pedal effort hydraulic pressure path connected to the wheel cylinder from which the remaining hydraulic pressure state is detected.

According to another aspect of the present invention, the brake control device includes an activation history acquiring unit (S425) that acquires an activation history of a pressure-increasing linear control valve provided to at least the individual linear control valve devices for adjusting the hydraulic pressures of the wheel cylinders for the front-left and front-right wheels during the hydraulic control; and a master cut valve close allowance unit (S427, S428) that allows a close-state keeping operation of the master cut valve device by the master cut valve closing control unit, if it is the condition in which the pressure-increasing linear control valve is opened once or more during the last predetermined hydraulic pressure control period based on the activation history of the pressure-increasing linear control valve, when at least one of the on-off valves of the master cut valve device is opened by the pressure-decrease control upon pedal-cancel unit (S423).

It is supposed that contaminants are jammed in the pressure-increasing linear control valve for adjusting the hydraulic pressures of the wheel cylinders for the front-left and front-right wheels. In this case, when the pressure-decrease control upon pedal-cancel unit opens at least one of the on-off valves of the master cut valve device upon the detection of the remaining hydraulic pressure state, but after that, the master cut valve closing control unit closes this on-off valve, operating fluid flows into the wheel cylinder to again cause the remaining hydraulic pressure state. In such case, the master cut valve closing control unit and the pressure-decrease control upon pedal-cancel unit alternately operates, by which the on-off valve of the master cut valve device is repeatedly opened and closed.

When the pressure-increasing linear control valve is opened only once during the hydraulic control, this pressure-increasing linear control valve has less possibility of having jammed contaminants. During the normal brake control, the wheel cylinders for the front-left, front-right, rear-left, and rear-right wheels are communicated with one another to execute the hydraulic control. Therefore, any of the pressure-increasing linear control valves can be deactivated, resulting in that a pressure-increasing linear control valve that is never opened during the last hydraulic control may be present. In view of this, in the present invention, the activation history acquiring unit acquires an activation history of a pressure-increasing linear control valve provided to at least the individual linear control valve devices for adjusting the hydraulic pressures of the wheel cylinders for the front-left and front-right wheels during the hydraulic control. In the case where at least one of the on-off valves of the master cut valve device is opened by the pressure-decrease control upon pedal-cancel unit, the master cut valve close allowance unit allows the close-state keeping operation of the master cut valve device by the master cut valve closing control unit, if it is the condition in which the pressure-increasing linear control valve is opened once or more during the last predetermined hydraulic pressure control period based on the activation history of the pressure-increasing linear control valve. With this control, if it is the condition in which the pressure-increasing linear control valve is opened once or more during the last predetermined hydraulic control, the on-off valve of the master cut valve device is closed, and keeps this closed state after the remaining hydraulic pressure state is not detected. Accordingly, this configuration can prevent the unfavorable situation in which the on-off valve is repeatedly opened and closed.

According to another aspect of the present invention, the brake control device includes a contaminant removal control unit (S432) that opens the pressure-increasing linear control valve provided to at least the individual linear control valve device for adjusting the hydraulic pressures of the wheel cylinders for the front-left and front-right wheels for a preset short period for removing contaminants, when the brake pedal operation is canceled.

In the present invention, the contaminant removal control unit opens the pressure-increasing linear control valve provided to at least the individual linear control valve device for adjusting the hydraulic pressures of the wheel cylinders for the front-left and front-right wheels for a preset short period for removing contaminants, when the brake pedal operation is canceled. With this, even when contaminants are jammed in the pressure-increasing linear control valve, the jammed contaminants can be removed. Accordingly, even when the on-off valve of the master cut valve device is closed by the master cut valve closing control unit, the hydraulic pressure of the wheel cylinder is not increased after that, whereby the unfavorable situation in which the on-off valve is repeatedly opened and closed can be suppressed.

In the above description, the reference numerals used in the embodiments are added in parentheses to the respective corresponding components in the embodiments, in order to facilitate understanding of the present invention. However, the respective constituents of the present invention are not intended to be limited to the components specified by the reference numerals in the embodiments.

### BRIEF DESCRIPTION OF THE DRAWINGS

FIG. 1 is a diagram illustrating a schematic system configuration of a vehicle brake control device according to an embodiment of the present invention.
FIG. 2 is a flowchart illustrating a communication control routine.
FIG. 3 is a flowchart illustrating a valve selection control routine.
FIG. 4 is a flowchart illustrating a modification of the valve selection control routine.
FIG. 5 is diagram illustrating an operating principle of a normally closed solenoid linear control valve.
FIG. 6 is an explanatory view illustrating an example of a flow path of operating fluid upon a pressure increase in a four-wheel communication mode.
FIG. 7 is an explanatory view illustrating an example of a flow path of operating fluid upon a pressure decrease in a four-wheel communication mode.
FIG. 8 is an explanatory view illustrating an example of a flow path of operating fluid upon a pressure increase in a partial communication mode.
FIG. 9 is an explanatory view illustrating an example of a flow path of operating fluid upon a pressure decrease in a partial communication mode.
FIG. 10 is an explanatory view illustrating an example of a flow path of operating fluid upon a pressure increase in a partial communication mode.
FIG. 11 is an explanatory view illustrating an example of a flow path of operating fluid upon a pressure decrease in a partial communication mode.
FIG. 12 is an explanatory view illustrating an example of a flow path of operating fluid upon a pressure increase in a four-wheel separation communication mode.
FIG. 13 is an explanatory view illustrating an example of a flow path of operating fluid upon a pressure decrease in a four-wheel separation communication mode.
FIG. 14 is an explanatory view illustrating an example of a flow path of operating fluid upon a pressure increase when a leakage of operating fluid is detected.
FIG. 15 is an explanatory view illustrating an example of a flow path of operating fluid upon a pressure increase when a hydraulic control is stopped due to abnormality in a control system.
FIG. 16 is a flowchart illustrating a pressure-decrease control upon pedal-cancel routine.
FIG. 17 is a flowchart illustrating a remaining hydraulic pressure prevention routine according to a first embodiment.
FIG. 18 is a flowchart illustrating a remaining hydraulic pressure prevention routine according to a second embodiment.
FIG. 19 is a flowchart illustrating a remaining hydraulic pressure prevention routine according to a third embodiment.
FIG. 20 is a flowchart illustrating a remaining hydraulic pressure prevention routine according to a fourth embodiment.

### BEST MODE FOR CARRYING OUT THE INVENTION

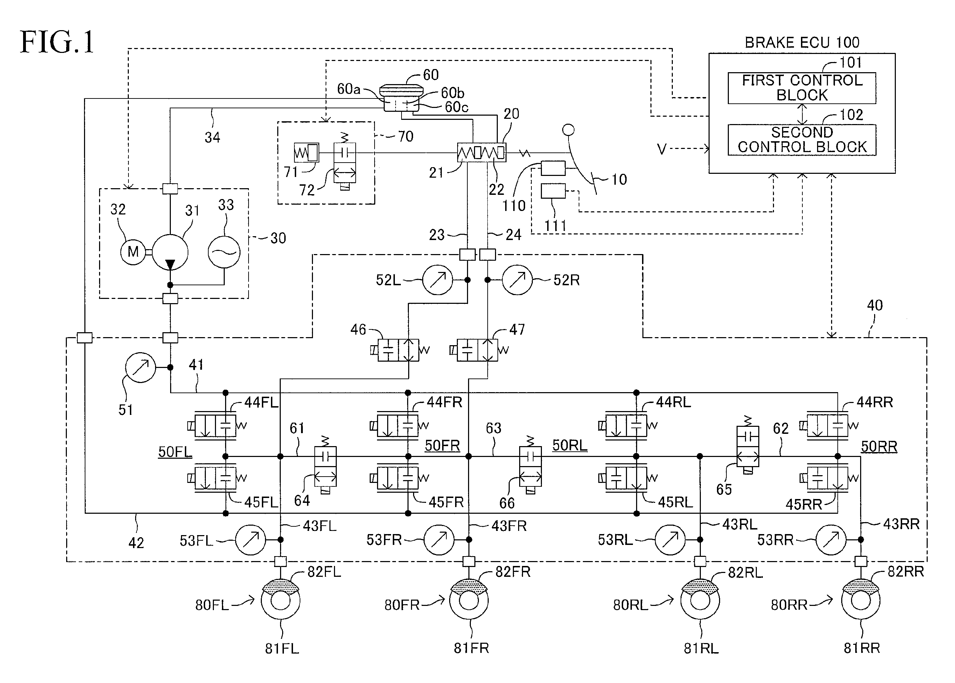

A vehicle brake control device according to one embodiment of the present invention will be described below with reference to the accompanying drawings. FIG. 1 is a diagram illustrating a schematic system configuration of a vehicle brake control device according to the embodiment of the present invention.

The brake control device according to the present embodiment includes a brake pedal 10, a master cylinder 20, a power hydraulic pressure generating device 30, a brake actuator 40, a reservoir 60, a stroke simulator device 70, disk brake units 80FL, 80FR, 80RL, and 80RR, each of which is provided to each wheel, and a brake ECU 100 serving as an electronic control device performing a brake control.

The disk brake units 80FL, 80FR, 80RL, and 80RR respectively include brake disks 81 FL, 81 FR, 81 RL, and 81 RR, and wheel cylinders 82FL, 82FR, 82RL, and 82RR incorporated in brake calipers. The wheel cylinders 82FL, 82FR, 82RL, and 82RR are connected to the brake actuator 40, and they press a brake pad against the brake disks 81 FL, 81 FR, 81 RL, and 81 RR, which rotate with wheels, by hydraulic pressure of the operating fluid (brake fluid) supplied from the brake actuator 40 to apply braking force to the wheels.

The master cylinder 20 includes two pressure chambers 21 and 22. The pressure chambers 21 and 22 are connected to the wheel cylinders 82FL and 82FR for the front wheels by master passages 23 and 24. When the brake pedal 10 is depressed, a pressure piston advances forward to increase the pressure of the operating fluid, and the master cylinder 20 transmits the increased hydraulic pressure (master cylinder pressure) to the wheel cylinders 82FL and 82FR. The reservoir 60 is connected to the pressure chambers 21 and 22 in the master cylinder 20. The reservoir 60 stores operating fluid with the atmospheric pressure. The master cylinder 20 is configured to allow the flow of the operating fluid from the reservoir 60 to the pressure chambers 21 and 22 when the pressure piston moves backward, while it is configured to inhibit the flow of the operating fluid in the opposite direction when the pressure piston moves forward.

The reservoir 60 is divided into three storage chambers 60a, 60b, and 60c, and these three storage chambers 60a, 60b, and 60c store operating fluid. The storage chamber 60a corresponds to the power hydraulic pressure generating device 30, and this is a storage chamber of operating fluid supplied to the power hydraulic pressure generating device 30. The storage chamber 60b corresponds to the pressure chamber 21, and this is a storage chamber of operating fluid supplied to the master passage 23. The storage chamber 60c corresponds to the pressure chamber 22, and this is a storage chamber of operating fluid supplied to the master passage 24.

The stroke simulator device 70 is connected to the pressure chamber 21 in the master cylinder 20. The stroke simulator device 70 includes a stroke simulator 71 and a simulator cut valve 72. The simulator cut valve 72 is a normally closed solenoid valve that keeps closed by biasing force of a spring when a solenoid is not energized, but is opened only when the solenoid is energized. When the simulator cut valve 72 is closed, the flow of the operating fluid between the pressure chamber 21 and the stroke simulator 71 is cut off. When the simulator cut valve 72 is opened, the flow of the operating fluid between the pressure chamber 21 and the stroke simulator 71 is allowed in both directions.

The stroke simulator 71 includes plural pistons and springs. When the simulator cut valve 72 is opened, the stroke simulator 71 takes inside the operating fluid in an amount according to a brake operation amount to enable a stroke operation of the brake pedal 10, and generates reaction force according to a pedal operation amount to allow a driver to feel a satisfactory brake operation sense.

The power hydraulic pressure generating device 30 is a device that generates a high hydraulic pressure even if a brake operation is not performed. The power hydraulic pressure generating device 30 includes a pump 31 that sucks operating fluid from the reservoir 60 via an intake passage 34, a motor 32 that drives the pump 31, and an accumulator 33. The accumulator 33 converts pressure energy of the operating fluid pressurized by the pump 31 into pressure energy of sealed gas such as nitrogen, and stores the resultant energy. The power hydraulic pressure generating device 30 is connected to the brake actuator 40, and supplies the pressurized operating fluid to the brake actuator 40.

The brake actuator 40 includes an accumulator passage 41 into which the pressurized operating fluid is supplied from the power hydraulic pressure generating device 30, a return passage 42 connected to the reservoir 60, and four individual passages 43FL, 43FR, 43RL, and 43RR connected to each of the wheel cylinders 82FL, 82FR, 82RL, and 82RR. The brake actuator 40 also includes pressure-increasing linear control valves 44FL, 44FR, 44RL, and 44RR, and connects the individual passages 43FL, 43FR, 43RL, and 43RR to the accumulator passage 41 via the pressure-increasing linear control valves 44FL, 44FR, 44RL, and 44RR. The brake actuator 40 also includes pressure-decreasing linear control valves 45FL, 45FR, 45RL, and 45RR, and connects the individual passages 43FL, 43FR, 43RL, and 43RR to the return passage 42 via the pressure-decreasing linear control valves 45FL, 45FR, 45RL, and 45RR.

The components provided for each wheel are represented such that FL for the front-left wheel, FR for the front-right wheel, RL for the rear-left wheel, and RR for the rear-right wheel are written at the end of the corresponding reference numeral. However, the reference symbols at the end are omitted, when it is unnecessary to specify any one of the components for the front-left, front-right, rear-left, and rear-right wheels.

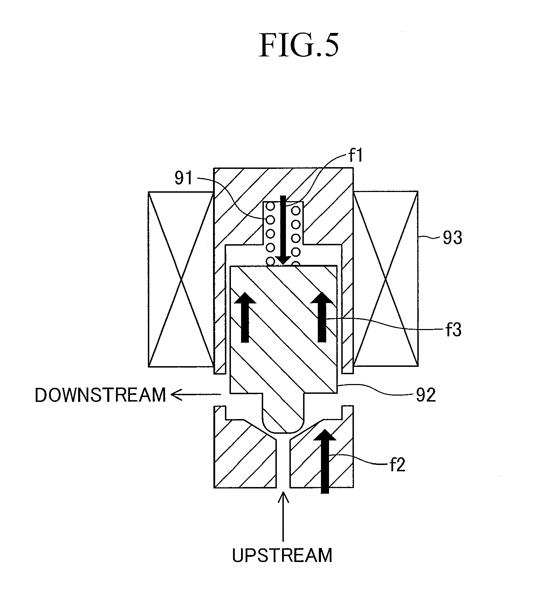

The pressure-increasing linear control valve 44 and the pressure-decreasing linear control valve 45 are solenoid linear control valves. The operating principle of the solenoid linear control valve will be described by using a normally closed solenoid linear control valve as an example. As illustrated in FIG. 5, the normally closed solenoid linear control valve keeps closed by valve closing force (f1 - f2) that is a difference between spring reaction force f1 of a spring 91 for biasing a valve element (plunger) 92 in the valve closing direction and hydraulic pressure force f2 that biases the valve element 92 in the valve opening direction due to differential pressure ΔP between a pressure at an upstream side (inlet side) and a pressure at a downstream side (outlet side). When electromagnetic force f3 generated by an application of an electric current to a solenoid 93 for opening the valve element 92 exceeds the valve closing force, the valve is opened with an opening degree according to balance of force exerted on the valve element 93. Accordingly, the opening degree of the valve element 92 is adjusted by controlling the amount of current applied to the solenoid 93 (current value), whereby the hydraulic pressure at the downstream side of the linear control valve can continuously be changed.

In the present embodiment, a normally closed solenoid linear control valve is used for the pressure-increasing linear control valves 44FL, 44FR, 44RL, and 44RR, and the pressure-decreasing linear control valves 45FL and 45FR for the front wheels, while a normally opened solenoid linear control valve is used for the pressure-decreasing linear control valves 45RL and 45RR for the rear wheels. With this, the pressure-increasing linear control valves 44FL, 44FR, 44RL, and 44RR are closed when current is not applied to their solenoids, and when current is applied to their solenoids, these valves are opened with an opening degree according to the amount of current applied to the solenoids, thereby allowing the inflow of the operating fluid into the wheel cylinders 82FL, 82FR, 82RL, and 82RR from the power hydraulic pressure generating device 30 to increase the wheel cylinder pressure. The pressure-decreasing linear control valves 45FL and 45FR for the front wheels are closed when current is not applied to their solenoids, and when current is applied to their solenoids, these valves are opened with an opening degree according to the amount of current applied to the solenoids, thereby allowing the outflow of the operating fluid to the reservoir 60 from the wheel cylinders 82FL and 82FR to decrease the wheel cylinder pressure. The pressure-decreasing linear control valves 45RL and 45RR for the rear wheels are opened when current is not applied to their solenoids, thereby allowing the outflow of the operating fluid to the reservoir 60 from the wheel cylinders 82RL and 82RR to decrease the wheel cylinder pressure. However, when current is applied to their solenoids, these valves are closed to inhibit the outflow of the operating fluid to the reservoir 60 from the wheel cylinders 82RL and 82RR. In this case, when the amount of current applied to the solenoids is small, the valve elements in the pressure-decreasing linear control valves 45RL and 45RR do not move up to the valve closing position, so that these valves are adjusted to have an opening degree according to the amount of the applied current.

Accordingly, an execution of an energization control of the pressure-increasing linear control valve 44 and the pressure-decreasing linear control valve 45 can switch among a state in which the inflow of the operating fluid to the wheel cylinder 82 from the power hydraulic pressure generating device 30 is allowed, a state in which the outflow of the operating fluid from the wheel cylinder 82 to the reservoir 60 is allowed, and a state in which neither the inflow of the operating fluid to the wheel cylinder 82 from the power hydraulic pressure generating device 30 nor the outflow of the operating fluid from the wheel cylinder 82 to the reservoir 60 is allowed. With this, the wheel cylinder pressure of each wheel can independently be controlled to a target hydraulic pressure.

An individual linear control valve device 50FL that controls the hydraulic pressure of the wheel cylinder 82FL is composed of the pressure-increasing linear control valve 44FL and the pressure-decreasing linear control valve 45FL, an individual linear control valve device 50FR that controls the hydraulic pressure of the wheel cylinder 82FR is composed of the pressure-increasing linear control valve 44FR and the pressure-decreasing linear control valve 45FR, an individual linear control valve device 50RL that controls the hydraulic pressure of the wheel cylinder 82RL is composed of the pressure-increasing linear control valve 44RL and the pressure-decreasing linear control valve 45RL, and an individual linear control valve device 50RR that controls the hydraulic pressure of the wheel cylinder 82RR is composed of the pressure-increasing linear control valve 44RR and the pressure-decreasing linear control valve 45RR. In the case where the individual linear control valve devices 50FR, 50FL, 50RR, and 50RL are not distinguished, they are merely referred to as an individual linear control valve device 50.

The brake actuator 40 includes master cut valves 46 and 47. The brake actuator 40 connects the master passage 23 and the individual passage 43FL via the master cut valve 46, and connects the master passage 24 and the individual passage 43FR via the other master cut valve 47. Both of two master cut valves 46 and 47 are a normally opened solenoid valve that keeps opened due to biasing force of a spring when a solenoid is not energized, and that is closed only when the solenoid is energized. When the master cut valve 46 is closed, the flow of the operating fluid between the pressure chamber 21 in the master cylinder 20 and the wheel cylinder 82FL for the front-left wheel is cut off, and when the master cut valve 46 is opened, the bidirectional flow of the operating fluid between the pressure chamber 21 in the master cylinder 20 and the wheel cylinder 82FL is allowed. Similarly, when the master cut valve 47 is closed, the flow of the operating fluid between the pressure chamber 22 in the master cylinder 20 and the wheel cylinder 82FR for the front-right wheel is cut off, and when the master cut valve 47 is opened, the bidirectional flow of the operating fluid between the pressure chamber 22 in the master cylinder 20 and the wheel cylinder 82FR is allowed.

The brake actuator 40 also includes a front-wheel left-right communication passage 61 that allows communication between the individual passage 43FL for the front-left wheel and the individual passage 43FR for the front-right wheel, a rear-wheel left-right communication passage 62 that allows communication between the individual passage 43RL for the rear-left wheel and the individual passage 43RR for the rear-right wheel, and a front-rear communication passage 63 that allows communication between the individual passage 43FR for the front-right wheel and the individual passage 43RL for the rear-left wheel. The front-wheel left-right communication passage 61 is provided with a front-wheel communication on-off valve 64, the rear-wheel left-right communication passage 62 is provided with a rear-wheel communication on-off valve 65, and the front-rear communication passage 63 is provided with a front-rear communication on-off valve 66.

The front-wheel communication on-off valve 64 is a normally closed solenoid valve that keeps closed by biasing force of a spring when its solenoid is not energized, and is opened only when its solenoid is energized. When the front-wheel communication on-off valve 64 is closed, the flow of the operating fluid between the wheel cylinder 82FL for the front-left wheel and the wheel cylinder 82FR for the front-right wheel is cut off, and when the front-wheel communication on-off valve 64 is opened, the flow of the operating fluid between the wheel cylinder 82FL for the front-left wheel and the wheel cylinder 82FR for the front-right wheel is allowed in both directions.

On the other hand, the rear-wheel communication on-off valve 65 is a normally opened solenoid valve that keeps opened by biasing force of a spring when its solenoid is not energized, and is closed only when its solenoid is energized. When the rear-wheel communication on-off valve 65 is opened, the flow of the operating fluid between the wheel cylinder 82RL for the rear-left wheel and the wheel cylinder 82RR for the rear-right wheel is allowed in both directions, and when the rear-wheel communication on-off valve 65 is closed, the flow of the operating fluid between the wheel cylinder 82RL for the rear-left wheel and the wheel cylinder 82RR for the rear-right wheel is cut off.

The front-rear communication on-off valve 66 is a normally closed solenoid valve that keeps closed by biasing force of a spring when its solenoid is not energized, and is opened only when its solenoid is energized. When the front-rear communication on-off valve 66 is closed, the flow of the operating fluid between the wheel cylinder 82FR for the front-right wheel and the wheel cylinder 82RL for the rear-left wheel is cut off, and when the front-wheel communication on-off valve 64 is opened, the flow of the operating fluid between the wheel cylinder 82FR for the front-right wheel and the wheel cylinder 82RL for the rear-left wheel is allowed in both directions.

Therefore, when all of the front-wheel communication on-off valve 64, the rear-wheel communication on-off valve 65, and the front-rear communication on-off valve 66 are opened, the wheel cylinders 82FL, 82FR, 82RL, and 82RR for the front-left wheel, front-right-wheel, rear-left wheel, and rear-right wheel can be communicated with one another.

The brake actuator 40 also includes an accumulator pressure sensor 51, master cylinder pressure sensors 52L and 52R, and wheel cylinder pressure sensors 53FL, 53FR, 53RL, and 53RR. The accumulator pressure sensor 51 is provided on the accumulator passage 41 that is a passage between the power hydraulic pressure generating device 30 and each pressure-increasing linear control valve 44 to detect an accumulator pressure Pacc that is a hydraulic pressure outputted from the power hydraulic pressure generating device 30. The master cylinder pressure sensors 52L and 52R are provided on the master passages 23 and 24 between the pressure chambers 21 and 22 in the master cylinder 20 and the master cut valves 46 and 47 to detect a hydraulic pressure of the operating fluid pressurized in the pressure chambers 21 and 22. The hydraulic pressure detected by the master cylinder pressure sensors 52L and 52R are referred to as master cylinder pressures PmL and PmR.

Each of the wheel cylinder pressure sensors 53FL, 53FR, 53RL, and 53RR are provided to each of the individual passages 43FL, 43FR, 43RL, and 43RR to detect a hydraulic pressure of each of wheel cylinders 82FL, 82FR, 82RL, and 82RR. The hydraulic pressures detected by the wheel cylinder pressure sensors 53FL, 53FR, 53RL, and 53RR are referred to as wheel cylinder pressures PwFL, PwFR, PwRL, and PwRR. The wheel cylinder pressure sensors 53FL, 53FR, 53RL, and 53RR and the wheel cylinder pressures PwFL, PwFR, PwRL, and PwRR are merely referred to as a wheel cylinder pressure sensor 53 and a wheel cylinder pressure Pw, when it is unnecessary to specify any one of them for front-left, front-right, rear-left, and rear-right wheels.

The power hydraulic pressure generating device 30, the brake actuator 40, and the stroke simulator device 70 are controlled to be driven by the brake ECU 100. The brake ECU 100 includes a microcomputer as a main component, and also includes, for example, a pump drive circuit, a solenoid valve drive circuit, an input interface receiving signals from various sensors, a communication interface, a power supply circuit, and the like. Four pressure-increasing linear control valves 44, four pressure-decreasing linear control valves 45, the front-wheel communication on-off valve 64, the rear-wheel communication on-off valve 65, the front-rear communication on-off valve 66, the master cut valves 46 and 47, and the simulator cut valve 72 are connected to the brake ECU 100. The brake ECU 100 outputs a solenoid drive signal to these valves to control to open or close each valve and to control the opening degree (in the case of the linear control valve) of each valve. The motor 32 provided to the power hydraulic pressure generating device 30 is also connected to the brake ECU 100, and the brake ECU 100 outputs a drive signal to the motor 32 to control to drive the motor 32.

The accumulator pressure sensor 51, the master cylinder pressure sensors 52R and 52L, and the wheel cylinder pressure sensors 53FR, 53FL, 53RR, and 53RL are connected to the brake ECU 100, whereby the brake ECU 100 receives signals indicating the accumulator pressure Pacc, the master cylinder pressures PmL and PmR, and the wheel cylinder pressures PwFR, PwFL, PwRR, and PwRL.

A pedal stroke sensor 110 and a pedal switch 111 are also connected to the brake ECU 100. The pedal stroke sensor 110 is a type of a pedal operation detecting device, and it detects a pedal stroke that is a depression amount of the brake pedal 10 and outputs a signal indicating the detected pedal stroke Sp to the brake ECU 100. The pedal switch 111 is turned on upon the depression of the brake pedal 10 up to a set position to turn on a stop lamp not illustrated. The pedal switch 111 outputs a signal (pedal switch signal) indicating a state of the switch to the brake ECU 100.

The brake ECU 100 is started when an ignition switch is turned on, or a courtesy switch outputting a signal according to an open/close state of a door of the vehicle is turned on (when the door is opened). Before the brake ECU 100 is started, energization of all solenoid control valves (on-off valves and linear control valves) provided to the brake actuator 40 and the stroke simulator device 75 is stopped. Therefore, the open/close state of each solenoid control valve is as illustrated in FIG. 1. Energization of the power hydraulic pressure generating device 30 is also stopped.

Next, a brake control executed by the brake ECU 100 will be described. The brake ECU 100 executes in parallel a hydraulic control for allowing the hydraulic pressure of each wheel cylinder to follow a target hydraulic pressure to generate braking force and a communication control for controlling a communication state among the respective wheel cylinders 82. The target hydraulic pressure used for the hydraulic control is different depending on a vehicle to which the brake control device is applied. An electric vehicle or a hybrid vehicle can perform a regenerative braking control in which rotating force of wheels generates electric power, and the generated electric power is collected to a battery to acquire braking force. Therefore, such vehicle can perform brake regenerative cooperation control using both regenerative braking and hydraulic braking. On the other hand, a vehicle that generates driving force only by an internal combustion engine cannot generate regenerative braking force. Therefore, such vehicle generates braking force only by the hydraulic control. The brake control device according to the present embodiment is applied to an electric vehicle or a hybrid vehicle to perform a brake regenerative cooperation control, but can be applied to a vehicle generating driving force only by an internal combustion engine.

In the hydraulic control, a pedal effort obtained by the driver's depressing operation of the brake pedal 10 is used only for detecting the brake operation amount without being transmitted to the wheel cylinder 82. Instead, the hydraulic pressure outputted from the power hydraulic pressure generating device 30 is transmitted to the wheel cylinder 82 after being individually adjusted by the pressure-increasing linear control valve 44 and the pressure-decreasing linear control valve 45 for each wheel. In the hydraulic control, the master cut valves 46 and 47 are maintained to be closed due to energization of their solenoids. The simulator cut valve 72 is kept opened due to energization of the solenoid. All of the pressure-increasing linear control valves 44 and the pressure-decreasing linear control valves 45 are controlled to have an opening degree according to an energization amount under an energization control state. Therefore, the hydraulic pressure outputted from the master cylinder 20 is not supplied to the wheel cylinder 82 for each wheel, but the hydraulic pressure outputted from the power hydraulic pressure generating device 30 is supplied thereto after being individually adjusted.

As described later, when the communication control is executed, some pressure-increasing linear control valves 44 and some pressure-decreasing linear control valves 45 are deactivated, and the remaining pressure-increasing linear control valves 44 and the pressure-decreasing linear control valves 45 are under the energization control state. This hydraulic control will be described in the case where the hydraulic control is independently executed for each of four wheels. A process of selecting the pressure-increasing linear control valve 44 and the pressure-decreasing linear control valve 45 used for the hydraulic control will also be described later.

The brake ECU 100 starts the brake regenerative cooperation control in response to a brake request. The brake request is generated when braking force has to be applied to the vehicle, e.g., when a driver depresses the brake pedal 10. When receiving the brake request, the brake ECU 100 calculates requested braking force based on the pedal stroke Sp detected by the pedal stroke sensor 110 and the master cylinder pressures PmL and PmR detected by the master cylinder pressure sensors 52L and 52R. In this case, the brake ECU 100 sets either one of the master cylinder pressures PmL and PmR or a value (e.g., an average) formed by combining both pressures as a master cylinder pressure Pm.

The requested braking force is set larger, as the pedal stroke Sp is larger, or as the master cylinder pressure Pm is larger. In this case, weighting coefficients Ks and Kr are multiplied respectively to the pedal stroke Sp and the master cylinder pressure Pm. The requested braking force may be calculated by setting the weighting coefficient Ks for the pedal stroke Sp to be larger within the range where the pedal stroke Sp is small, or by setting the weighting coefficient Kr for the master cylinder pressure Pm to be larger within the range where the pedal stroke Sp is large.

The brake ECU 100 transmits information indicating the calculated requested braking force to a regenerative ECU. The regenerative ECU calculates braking force generated due to power regeneration in the requested braking force, and transmits information indicating the regenerative braking force, which is the result of the calculation, to the brake ECU 100. With this process, the brake ECU 100 calculates requested hydraulic braking force, which is braking force that should be generated by the brake control device, by subtracting the regenerative braking force from the requested braking force. The regenerative braking force generated due to the power regeneration by the regenerative ECU is changed not only by the rotating speed of the motor, but also by a regenerative current control due to a state of charge (SOC) of a battery, for example. Accordingly, the brake ECU 100 can calculate appropriate requested hydraulic braking force by subtracting the regenerative braking force from the requested braking force.

The brake ECU 100 calculates a target hydraulic pressure of each wheel cylinder 82 based on the calculated requested hydraulic braking force, and controls a drive current of the pressure-increasing linear control valve 44 and the pressure-decreasing linear control valve 45 by a feedback control so as to cause the wheel cylinder pressure to be equal to the target hydraulic pressure. Specifically, the brake ECU 100 controls a current flowing through the pressure-increasing linear control valve 44 and the pressure-decreasing linear control valve 45 in order that the wheel cylinder pressure Pw detected by the wheel cylinder pressure sensor 53 for each wheel follows the target hydraulic pressure.

With this process, the operating fluid is supplied to the wheel cylinder 82 from the power hydraulic pressure generating device 30 via the pressure-increasing linear control valve 44, whereby braking force is applied to the wheels. In addition, the operating fluid is discharged from the wheel cylinder 82 via the pressure-decreasing linear control valve 45 as necessary, whereby the braking force applied to the wheels is adjusted.

During the normal brake control, the same target hydraulic pressure is set for four wheels. However, when a vehicle behavior control such as a turning control or a special brake control such as an ABS control is performed, a different target hydraulic pressure is set for each wheel, and the pressure-increasing linear control valve 44 and the pressure-decreasing linear control valve 45 are controlled in order that the wheel cylinder pressure Pw detected by the wheel cylinder pressure sensor 53 for each wheel follows the corresponding target hydraulic pressure.

The brake ECU 100 stores valve-opening current characteristics of each of the pressure-increasing linear control valves 44 and each of the pressure-decreasing linear control valves 45 for controlling the energization of the pressure-increasing linear control valves 44 and the pressure-decreasing linear control valves 45. A solenoid linear control valve has a certain relationship between a differential pressure ΔP, which is a difference between an upstream-side hydraulic pressure (inlet-side hydraulic pressure) and a downstream-side hydraulic pressure (outlet-side hydraulic pressure), and a valve-opening current. In a normally closed solenoid linear control valve, the valve-opening current means a current value at the time when a valve element that is closed starts to be opened due to an increase in a current flowing through a solenoid. In a normally opened solenoid linear control valve, the valve-opening current means a current value at the time when a valve element that is closed starts to be opened due to a decrease in a current flowing through a solenoid. The valve-opening current characteristic represents a correlation between the valve-opening current and the differential pressure ΔP. The normally closed solenoid linear control valve has the valve-opening current characteristic in which, the larger the differential pressure ΔP becomes, the smaller the valve-opening current becomes according to a linear function. The normally opened solenoid linear control valve has the valve-opening current characteristic in which, the larger the differential pressure ΔP becomes, the larger the valve-opening current becomes according to a linear function.

When controlling the energization of the pressure-increasing linear control valve 44 and the pressure-decreasing linear control valve 45, the brake ECU 100 obtains a valve-opening current i open corresponding to the differential pressure ΔP between the upstream-side hydraulic pressure and the downstream-side hydraulic pressure of the linear control valve by referring to the valve-opening current characteristic, and sets a target current i* applied to the linear control valve by using the valve-opening current i open as a reference. For example, the target current i* is calculated by adding a value, which is obtained by multiplying a deviation between the target hydraulic pressure P* and the wheel cylinder pressure Pw by a feedback gain Gfb, to the valve-opening current i open (i* = i open + Gfb · (P* - Pw)). When the deviation (P* - Pw) is positive, the pressure-increasing linear control valve 44 is opened with an opening degree according to the deviation to increase the wheel cylinder pressure. When the deviation (P* - Pw) is negative, a feedback control term is calculated by using the absolute value of the deviation, and the pressure-decreasing linear control valve 45 is opened with an opening degree according to the absolute value of the deviation to decrease the wheel cylinder pressure. The feedback gain Gfb is separately set upon increasing pressure and upon decreasing pressure.

When the accumulator pressure Pacc detected by the accumulator pressure sensor 51 is less than a minimum set pressure set beforehand, the brake ECU 100 drives the motor 32 to increase the pressure of the operating fluid by the pump 31 so as to control the accumulator pressure Pacc to always fall within the set pressure range.

The brake ECU 100 also keeps the simulator cut valve 72 opened. With this, the operating fluid sent from the pressure chamber 21 in the master cylinder 20 is supplied to the stroke simulator 71 with the driver's pedal operation for the brake pedal 10. Thus, the brake ECU 100 can exert reaction force according to the driver's pedal effort to the brake pedal 10, thereby being capable of providing satisfactory pedal operation feeling to the driver.

In the brake ECU 100, the system configuration executing the hydraulic control is divided into two control block systems, and each block system independently includes a microcomputer, a solenoid valve drive circuit, an input/output interface, a power supply circuit, and the like. In the present embodiment, the configuration controlling the hydraulic pressures of the wheel cylinders 82 for the diagonal wheels is specified as one control block system. Specifically, the system is divided into a first control block 101 that controls the hydraulic pressure of the wheel cylinder 82FL for the front-left wheel and the hydraulic pressure of the wheel cylinder 82RR for the rear-right wheel, and a second control block 102 that controls the hydraulic pressure of the wheel cylinder 82FR for the front-right wheel and the hydraulic pressure of the wheel cylinder 82RL for the rear-left wheel. Therefore, in the first control block 101, the energization of the individual linear control valve devices 50FL and 50RR is controlled based on the hydraulic pressure sensors 53FL and 53RR, and in the second control block 102, the energization of the individual linear control valve devices 50FR and 50RL is controlled based on the hydraulic pressure sensors 53FR and 53RL. The front-wheel communication on-off valve 64, the rear-wheel communication on-off valve 65, the front-rear communication on-off valve 66, the master cut valves 46 and 47, the simulator cut valve 72, and the power hydraulic pressure generating device 30 are configured to be capable of being controlled by any of two control block systems 101 and 102. The microcomputer in the first control block 101 and the microcomputer in the second control block 102 are connected to each other so as to make communication, whereby they can receive and transmit their control information with each other.

In the brake ECU 100 thus configured, even when either one of the control blocks becomes abnormal, the other control block can continue the hydraulic control. In this case, the hydraulic pressure of some wheel cylinders 82, which hydraulic pressure is a subject to be controlled by the abnormal control block, can be controlled by using the normal control block due to the later-described communication control.

### <Communication control>

When the pressure-increasing linear control valve 44 or the pressure-decreasing linear control valve 45 is opened, an operating noise sometimes occurs. This operating noise is generated by the transmission of pulsation of the hydraulic pressure to pipes or a vehicle body, the pulsation being generated at the moment the pressure-increasing linear control valve 44 or the pressure-decreasing linear control valve 45 is opened. This operating noise might provide uncomfortable feeling to a driver. In the system according to the present embodiment in which the pressure-increasing linear control valve 44 and the pressure-decreasing linear control valve 45 are provided to the wheel cylinder 82 for each of the front-left, front-right, rear-left, and rear-right wheels, these linear control valves 44 and 45 being independently controlled, much operating noise occurs. During the normal brake control in which a vehicle behavior control such as a turning control or a special brake control such as an ABS control is not performed, a target hydraulic pressure P* for four wheel cylinders 82 is set to be the same (same value), so that the hydraulic pressure of each of the wheel cylinders 82 is not necessarily controlled independently by the individual linear control valve device. In view of this, in the present embodiment, the hydraulic control is executed under the condition in which the four wheel cylinders 82 are communicated with one another, and some of the pressure-increasing linear control valves 44 and some of the pressure-decreasing linear control valve 45 are deactivated, depending on a case, in order to suppress the occurrence (number of occurrences) of an operating noise.

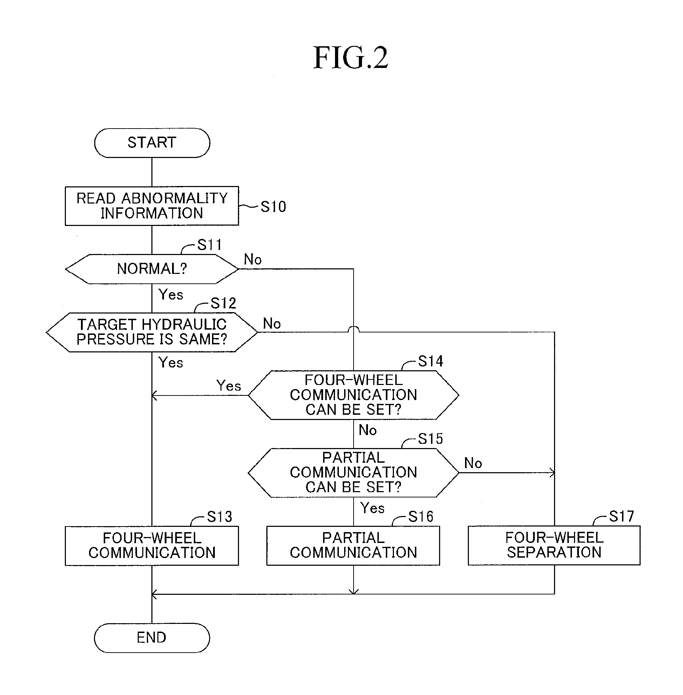

FIG. 2 illustrates a communication control routine executed by the microcomputer in the brake ECU 100. The microcomputer in the first control block 101 and the microcomputer in the second control block 102, which share information with each other, execute the communication control routine in cooperation with each other. However, it may be configured such that the microcomputer in either one of the control blocks preferentially executes this routine, and when something abnormal occurs in this control block, the microcomputer in the other control block executes this routine. Alternatively, a microcomputer exclusively used for the communication control may be provided, and this microcomputer exclusively used for the communication control may acquire information from the microcomputer in the first control block and the microcomputer in the second control block to execute the communication control routine.

The communication control routine is repeatedly executed in a predetermined short cycle after the brake ECU 100 is started, and an initial diagnosis process in the brake control device is finished. After the communication control routine is started, the brake ECU 100 reads abnormality information in step S10. In step S11, the brake ECU 100 determines whether the brake control device is normal or not, i.e., whether abnormality is detected in the brake control device or not, based on the abnormality information. The brake ECU 100 includes an abnormality detection unit that detects abnormality in the brake control device, such as abnormality in a control system or an abnormal leakage of operating fluid. This abnormality detection unit repeatedly executes an abnormality detection routine (not illustrated) in a predetermined cycle. Therefore, in step S10, the detection result of the abnormality detection routine is read. This detection result includes not only the result as to whether abnormality occurs or not but also information indicating the detail of the abnormality.

The abnormality detection will be described here. The brake ECU 100 checks all abnormalities in the brake control device, such as abnormality in the control system or an abnormal leakage of operating fluid. The abnormality of the control system means a state in which a hydraulic pressure of at least one of the wheel cylinders 82 cannot be controlled. For example, the abnormality of the control system corresponds to the case where at least one of the solenoid control valves including the pressure-increasing linear control valve 44, the pressure-decreasing linear control valve 45, the communication on-off valves 64, 65, and 66, the master cut valves 46 and 47, and the simulator cut valve 72 are disconnected or short-circuited. The abnormality of the control system also corresponds to the case where at least one of the sensors including the hydraulic pressure sensors 51, 52L, 52R, 53FL, 53FR, 53RL, and 53RR, the pedal stroke sensor 110, and the pedal switch 111 does not output appropriate detection values. The abnormality of the control system also corresponds to the case where operating fluid with an appropriate pressure cannot be supplied from the power hydraulic pressure generating device 30 (e.g., the motor 32 is in failure). The abnormality of the control system also corresponds to an abnormal power supply state where appropriate electric power cannot be supplied to the solenoid valves, sensors, and motors.

On the other hand, as for the abnormal leakage of the operating fluid, it does not matter whether the possibility of the leakage of the operating fluid is high or low, or whether the leaked amount is large or small. Therefore, the state where it cannot be determined that the leakage does not occur is determined as an abnormal leakage of the operating fluid, even when the possibility of the leakage of the operating fluid is extremely low, or even when the leaked amount is extremely small. The leakage of the operating fluid corresponds to the case where a level switch (not illustrated) provided to the reservoir 60 detects the reduction in a level of the operating fluid. The leakage of the operating fluid also corresponds to the case where the relationship between the stroke of the brake pedal 10 and the hydraulic pressure of the master cylinder 20 is outside an appropriate range. The leakage of the operating fluid corresponds to the case where the accumulator pressure Pacc detected by the accumulator pressure sensor 51 does not exceed a fluid leakage determination value, even if the pump 31 continues to operate for a set time or longer.

In some cases, the abnormality cannot be determined as the abnormality in the control system or an abnormal leakage of operating fluid, in the case where the hydraulic pressure Pw of each wheel cylinder does not become the same during the execution of the later-described four-wheel communication mode, or where the wheel cylinder pressure Pw does not follow the target hydraulic pressure even if the hydraulic control is performed. Such case is determined as the case where something abnormal occurs in the brake control device.

When abnormality is not detected in the brake control device (S11: Yes), the brake ECU 100 proceeds to step S12 to determine whether the target hydraulic pressures P* for the four wheel cylinders 82 are substantially the same value or not. For example, the brake ECU 100 reads the target hydraulic pressures P* for the four wheel cylinders 82, extracts a maximum value P*max and a minimum value P*min from the read target hydraulic pressures, and determines whether the difference between them (P*max - P*min) is smaller than a threshold value A or not. When the difference between the target hydraulic pressures (P*max - P*min) is smaller than the threshold value A, the brake ECU 100 determines that the target hydraulic pressures P* for the four wheel cylinders 82 are substantially the same value. The threshold value A is a set value within a range by which the brake ECU 100 can determine that it is no problem in executing the hydraulic control with the target hydraulic pressures P* for the four wheel cylinders 82 being set to be the same value. A brake mode satisfying the conditions in steps S11 and S12 corresponds to a normal brake control. When the brake pedal operation is not performed, the target hydraulic pressures P* for the four wheel cylinders 82 are all set to zero (atmospheric pressure), so that the determination in step S12 becomes "Yes".

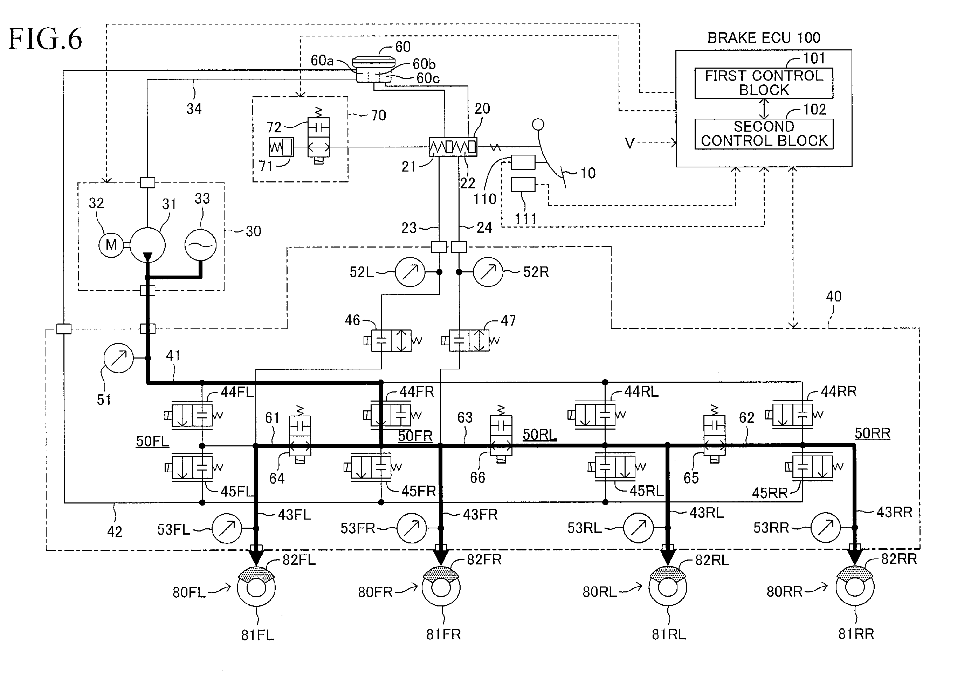

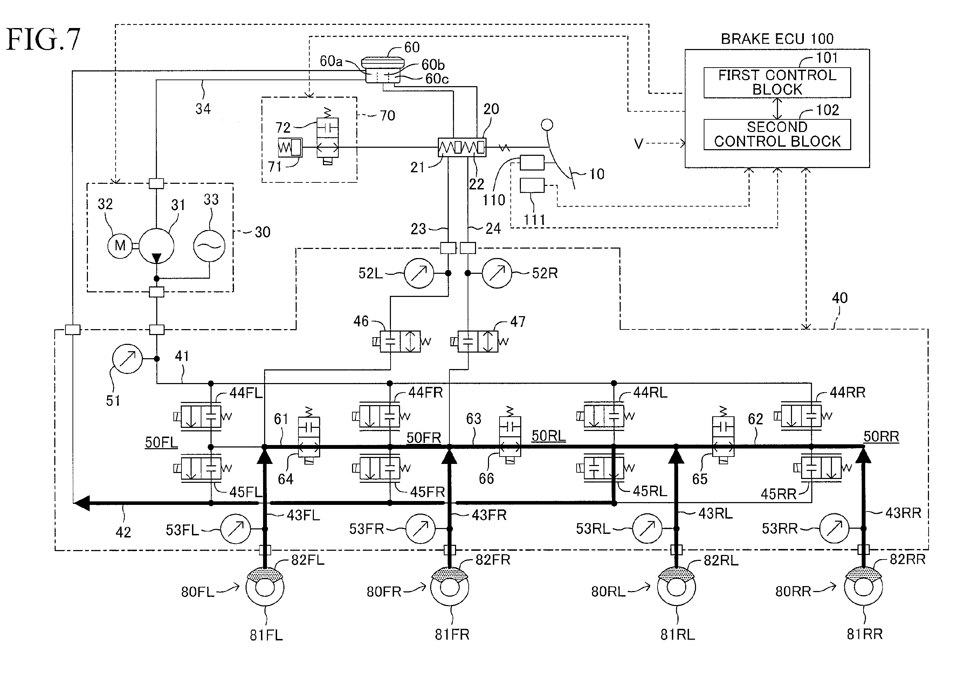

When determining that the target hydraulic pressures P* of the four wheel cylinders 82 are the same value (S12: Yes), the brake ECU 100 proceeds to step S13 to set the communication mode to the four-wheel communication mode. In the four-wheel communication mode, the front-wheel communication on-off valve 64, the rear-wheel communication on-off valve 65, and the front-rear communication on-off valve 66 are all kept opened as illustrated in FIGS. 6 and 7. In this case, the front-wheel communication on-off valve 64 and the front-rear communication on-off valve 66, which are a normally closed solenoid valve, are energized, while the rear-wheel communication on-off valve 65 that is a normally opened type is not energized. With this, the four wheel cylinders 82 are communicated with one another. In the four-wheel communication mode, the hydraulic pressure of each wheel cylinder 82 can be increased by using any of the pressure-increasing linear control valves 44, and the hydraulic pressure of each wheel cylinder 82 can be decreased by using any of the pressure-decreasing linear control valves 45. Since the hydraulic pressures of all wheel cylinders 82 become the same, a common hydraulic pressure that is the hydraulic pressure of each wheel cylinder can be detected by using the detection value of any of the hydraulic pressure sensors 53. The brake ECU 100 ends the communication control routine after setting the communication mode. Then, the brake ECU 100 repeatedly executes the communication control routine at a predetermined cycle. Therefore, when abnormality is not detected in the brake control device, the communication mode is set to the four-wheel communication mode, even if the brake request is not issued, so long as the target hydraulic pressures P* are the same. In other words, the four wheel cylinders 82 are always kept communicated with one another after the start of the brake ECU 100.

When abnormality is not detected in the brake control device, the brake ECU 100 keeps the communication mode in the four-wheel communication mode, even if the brake request is not issued. In addition to this process, the brake ECU 100 also keeps the master cut valves 46 and 47 closed.

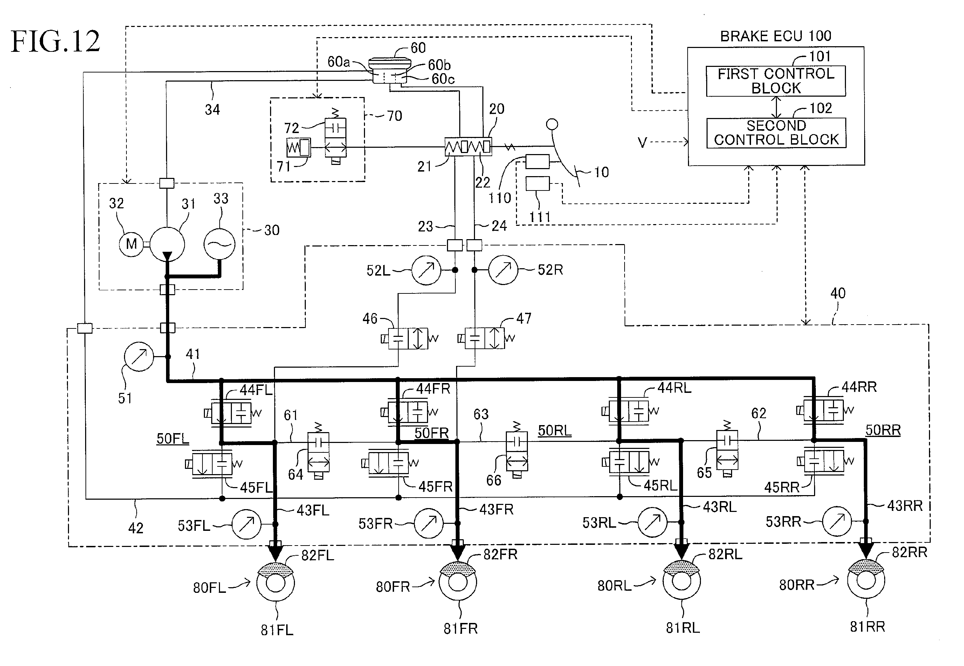

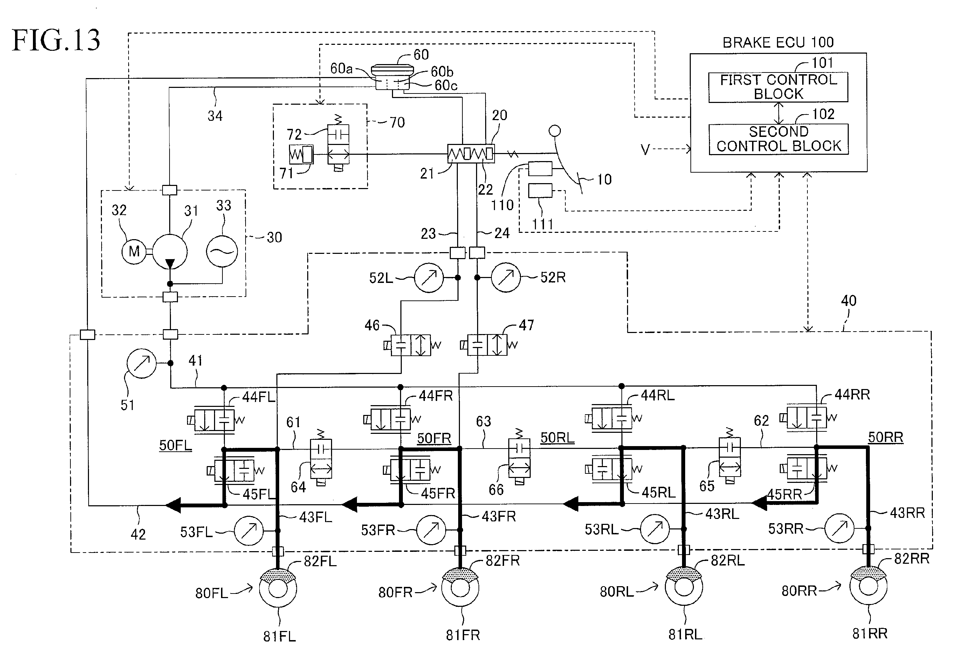

On the other hand, when determining that the target hydraulic pressures P* of the four wheel cylinders 82 are not the same value (S12: No), the brake ECU 100 proceeds to step S17 to set the communication mode to a four-wheel separation mode. In the four-wheel separation mode, the front-wheel communication on-off valve 64, the rear-wheel communication on-off valve 65, and the front-rear communication on-off valve 66 are all kept closed as illustrated in FIGS. 12 and 13. In this case, the front-wheel communication on-off valve 64 and the front-rear communication on-off valve 66, which are a normally closed solenoid valve, are not energized, while the rear-wheel communication on-off valve 65 that is a normally opened type is energized. With this, the communication among the four wheel cylinders 82 is shut off. In the four-wheel separation mode, the hydraulic pressure of each wheel cylinder 82 is independently adjusted by each pressure-increasing linear control valve 44 and each pressure-decreasing linear control valve 45. In addition, even if a control component for a specific wheel is in failure, the hydraulic control for the other wheels can be prevented from being affected by this failure as much as possible.

When determining that abnormality is detected in the brake control device in step S11, the brake ECU 100 determines in step S14 whether the four-wheel communication mode can be executed or not based on the detail of the abnormality.

The brake ECU 100 stores beforehand a four-wheel communication allowable condition. Only when the detail of the abnormality satisfies this four-wheel communication allowable condition, the brake ECU 100 determines that the four-wheel communication mode can be executed. When determining that the four-wheel communication mode can be executed (S14: Yes), the brake ECU 100 proceeds to step S13 to set the communication mode to the four-wheel communication mode.

The four-wheel communication allowable condition is composed of a first condition in which, even if abnormality is detected in some of the pressure-increasing linear control valves 44 or in some of the pressure-decreasing linear control valves 45, the hydraulic pressures of all wheel cylinders 82 can be controlled by the activation of the remaining pressure-increasing linear control valves 44 or the remaining pressure-decreasing linear control valves 45, and a second condition in which, even if abnormality is detected in some of the hydraulic pressure sensors 53, the common hydraulic pressure of each wheel cylinder can be detected by the remaining hydraulic pressure sensors 53. Therefore, when abnormality is detected in none of the pressure-increasing linear control valves 44 or none of the pressure-decreasing linear control valves 45, the second condition becomes the four-wheel communication allowable condition, and when abnormality is detected in none of the hydraulic pressure sensors 53, the first condition becomes the four-wheel communication allowable condition. When abnormality is detected in some of the pressure-increasing linear control valves 44 or in some of the pressure-decreasing linear control valves 45, as well as when abnormality is detected in some of the hydraulic pressure sensors 53, an AND condition of the first condition and the second condition becomes the four-wheel communication allowable condition.

For example, when abnormality is detected only in the pressure-increasing linear control valves 44, and at least one normal pressure-increasing linear control valve 44 is present (at least one pressure-increasing linear control valve 44 has no abnormality), the brake ECU 100 determines that the four-wheel communication mode can be executed, and sets the communication mode to the four-wheel communication mode. Since the pressure-increasing linear control valve 44 is a normally closed type, it can keep closed in an abnormal status such as disconnection. Therefore, this configuration can prevent the operating fluid supplied from the power hydraulic pressure generating device 30 from flowing through the wheel cylinder 82 from the pressure-increasing linear control valve 44 having abnormality. Accordingly, the brake ECU 100 can appropriately increase the hydraulic pressures of all wheel cylinders 82 with the normal pressure-increasing linear control valve 44 by setting the communication mode to the four-wheel communication mode.

When abnormality is detected in either one or both of the pressure-decreasing linear control valves 45FL and 45FR for the front wheels, but abnormality is not detected in either one or both of the pressure-decreasing linear control valves 45RL and 45RR for the rear wheels, the brake ECU 100 determines in step S14 that the four-wheel communication mode can be executed, and sets the communication mode to the four-wheel communication mode. Since the pressure-decreasing linear control valves 44FL and 45FR for the front wheels are a normally closed type, they can keep closed in an abnormal status such as disconnection. Therefore, this configuration can prevent the operating fluid from flowing through the return passage 42 from the pressure-decreasing linear control valve 45 having abnormality. Accordingly, the brake ECU 100 can appropriately decrease the hydraulic pressures of all wheel cylinders 82 with the normal pressure-decreasing linear control valves 45RL and 45RR by setting the communication mode to the four-wheel communication mode. On the other hand, the pressure-decreasing linear control valves 45RL and 45RR for the rear wheels are a normally opened type. Therefore, they can keep opened in an abnormal status such as disconnection. When the communication mode is set to the four-wheel communication mode, the appropriate hydraulic control cannot be executed. Therefore, the four-wheel communication allowable condition is not satisfied, so that the brake ECU 100 determines "No" in step S14.

When abnormality is not detected in the pressure-decreasing linear control valves 45RL and 45RR for the rear wheels even if abnormality is detected in both the pressure-increasing linear control valve 44 and the pressure-decreasing linear control valve 45, the brake ECU 100 proceeds to step S13 to set the communication mode to the four-wheel communication mode, since this situation satisfies the four-wheel communication allowable condition.

When abnormality is detected in only the hydraulic pressure sensors 53, but at least one normal hydraulic pressure sensor 53 is present (at least one hydraulic pressure sensor 53 has no abnormality), the brake ECU 100 determines in step S14 that the four-wheel communication mode can be executed. Then, the brake ECU 100 proceeds to step S13 to set the communication mode to the four-wheel communication mode. In the four-wheel communication mode, the respective wheel cylinders 82 have the same pressure. Therefore, the brake ECU 100 can detect the hydraulic pressures of all wheel cylinders 82 with the normal hydraulic pressure sensor 53 by setting the communication mode to the four-wheel communication mode.

When the four-wheel communication allowable condition is not established (S14: No), the brake ECU 100 proceeds to step S15. The brake ECU 100 determines in step S15 whether a partial communication mode can be executed or not based on the detail of the abnormality detected by the abnormality detection routine. The partial communication mode is a mode in which only some of the wheel cylinders 82 out of the four wheel cylinders 82 are communicated with one another. The brake ECU 100 determines in step S15 that the partial communication mode is possible, in the case where at least the abnormal portion can be specified, and it is all right to allow some wheel cylinders 82 to be communicated with one another. The brake ECU 100 then proceeds to step S16 to set the communication mode to the partial communication mode. In the partial communication mode, the communication system of the wheel cylinders 82 is set according to the detail of the detected abnormality.

The brake ECU 100 stores beforehand an abnormality pattern by which the partial communication mode is possible, and a communication system corresponding to this abnormality pattern as a partial communication allowable condition. The brake ECU 100 determines whether the partial communication mode can be executed or not based on whether the detail of the detected abnormality is included in the abnormality pattern specified by the partial communication allowable condition. When determining that the partial communication mode can be executed (S15: Yes), the brake ECU 100 controls the open/close state of the front-wheel communication on-off valve 64, the rear-wheel communication on-off valve 65, and the front-rear communication on-off valve 66 according to the communication system specified by the partial communication allowable condition (S16).

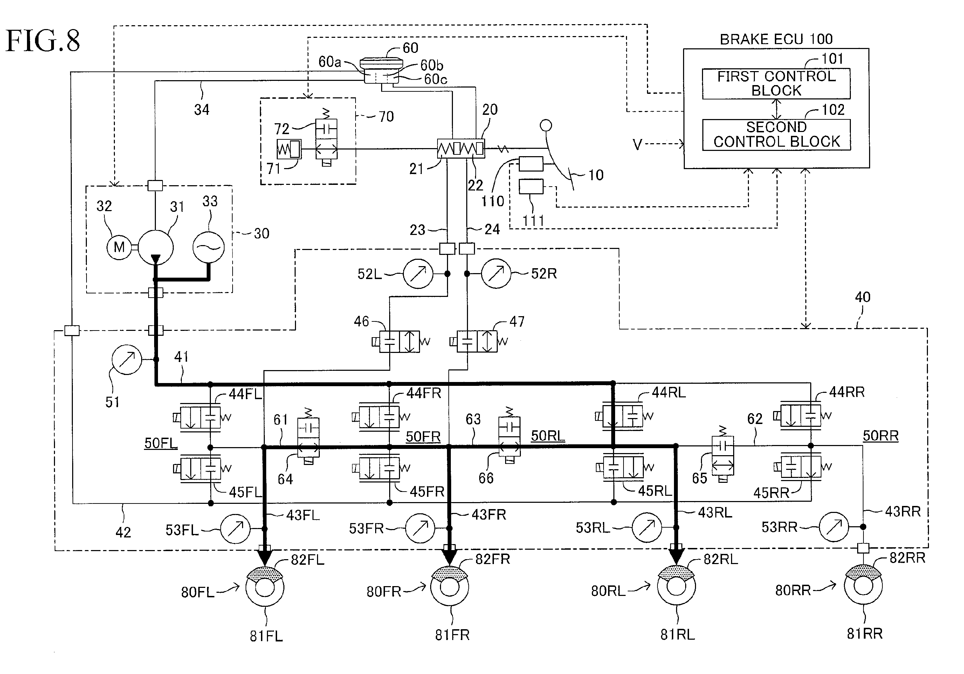

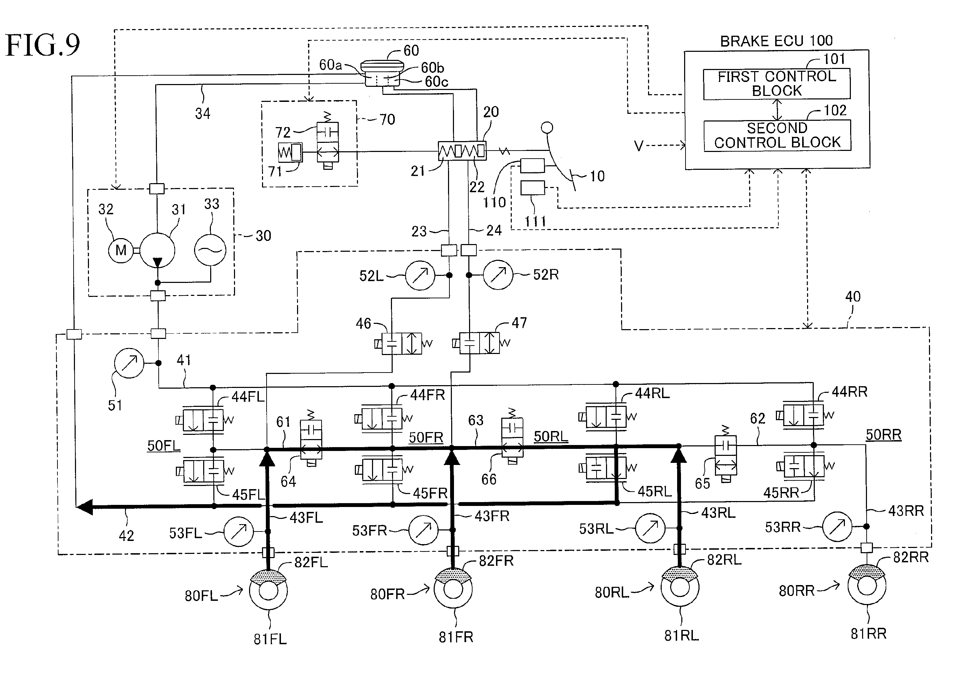

For example, when abnormality is detected in only the pressure-decreasing linear control valve 45RR controlling the hydraulic pressure of the wheel cylinder 82RR for the rear-right wheel, the brake ECU 100 determines in step S15 that the partial communication mode can be executed, and sets the communication mode to the partial communication mode. In this case, the brake ECU 100 keeps the rear-wheel communication on-off valve 65 closed, and keeps the front-wheel communication on-off valve 64 and the front-rear communication on-off valve 66 opened as illustrated in FIGS. 8 and 9. With this operation, the wheel cylinders 82FL and 82FR for the front wheels and the wheel cylinder 82RL for the rear-left wheel are kept communicated with one another. Accordingly, the brake ECU 100 can inhibit the wheel cylinder 82RR for the rear-right wheel from communicating with the other wheel cylinders 82. In this case, the brake ECU 100 stops energization of the pressure-increasing linear control valve 44RR to open the pressure-increasing linear control valve 44RR, whether the hydraulic control is now executed or not.

When abnormality is detected only in the pressure-decreasing linear control valve 45RL controlling the hydraulic pressure of the wheel cylinder 82RL for the rear-left wheel, the brake ECU 100 keeps the front-rear communication on-off valve 66 and the rear-wheel communication on-off valve 65 closed, and keeps the front-wheel communication on-off valve 64 opened . With this operation, the brake ECU 100 can inhibit the wheel cylinder 82RL for the rear-left wheel from communicating with the other wheel cylinders 82. In this case, the brake ECU 100 stops energization of the pressure-increasing linear control valve 44RL to open the pressure-increasing linear control valve 44RL, whether the hydraulic control is now executed or not. Under this situation, the hydraulic pressure of the wheel cylinder 82RR for the rear-right wheel cannot be controlled by using the pressure-increasing linear control valves 44FL and 44FR and the pressure-decreasing linear control valves 45FL and 45FR for the front wheels, and can be controlled only by using the pressure-increasing linear control valve 44RR and the pressure-decreasing linear control valve 45RR.

In the case where there is a possibility of a leakage of operating fluid, and the portion from which the leakage occurs can be determined to be the wheel cylinder 82 for a specific wheel, the brake ECU 100 may release the specified wheel cylinder 82 from the communication state. For example, when it can be determined that a leakage of operating fluid occurs only on the wheel cylinder 82RR for the rear-right wheel, the brake ECU 100 keeps the rear-wheel communication on-off valve 65 closed, and keeps the front-wheel communication on-off valve 64 and the front-rear communication on-off valve 66 closed. With this operation, the wheel cylinders 82FL and 82FR for the front-left and front-right wheels and the wheel cylinder 82RL for the rear-left wheel can be kept communicated with one another. Therefore, the brake ECU 100 can inhibit the wheel cylinder 82RR for the rear-right wheel from communicating with the other wheel cylinders 82. In this case, the brake ECU 100 stops energization of the pressure-increasing linear control valve 44RR to close the pressure-increasing linear control valve 44RR, whether the hydraulic control is now executed or not.

When abnormality occurs on one of the divided control block systems, the brake ECU 100 sets the communication mode to the partial communication mode. With this, the brake ECU 100 can control the hydraulic pressure of the wheel cylinder 82 for at least the front wheels in the control block having abnormality by using the other control block. In this case, the communication between the wheel cylinder 82RL (or 82RR) for the rear wheels that is the subject to be controlled by the control block having abnormality and the other wheel cylinders 82 has to be shut off. For example, when abnormality occurs in the first control block 101 controlling the hydraulic pressures of the wheel cylinder 82FL for the front-left wheel and the wheel cylinder 82RR for the rear-right wheel, the brake ECU 100 keeps the rear-wheel communication on-off valve 65 closed, and keeps the front-wheel communication on-off valve 64 and the front-rear communication on-off valve 66 opened. With this operation, the hydraulic pressures of the wheel cylinders 82FL, 82FR, and 82RL for the front-left, front-right, and rear-left wheels can be controlled by using the pressure-increasing linear control valves 44FR and 44RL and the pressure-decreasing linear control valves 45FR and 45RL in the second control block system. When abnormality occurs in the second control block 102 controlling the hydraulic pressures of the wheel cylinder 82FR for the front-right wheel and the wheel cylinder 82RL for the rear-left wheel, the brake ECU 100 keeps the rear-wheel communication on-off valve 65 and the front-rear communication on-off valve 66 closed, and keeps the front-wheel communication on-off valve 64 opened. With this operation, the hydraulic pressures of the wheel cylinders 82FL and 82FR for the front-left and front-right wheels can be controlled by using the pressure-increasing linear control valve 44FL and the pressure-decreasing linear control valve 45FL in the first control block system, and the hydraulic pressure of the wheel cylinder 82RR for the rear-right wheel can be controlled by using the pressure-increasing linear control valve 44RR and the pressure-decreasing linear control valve 45RR.

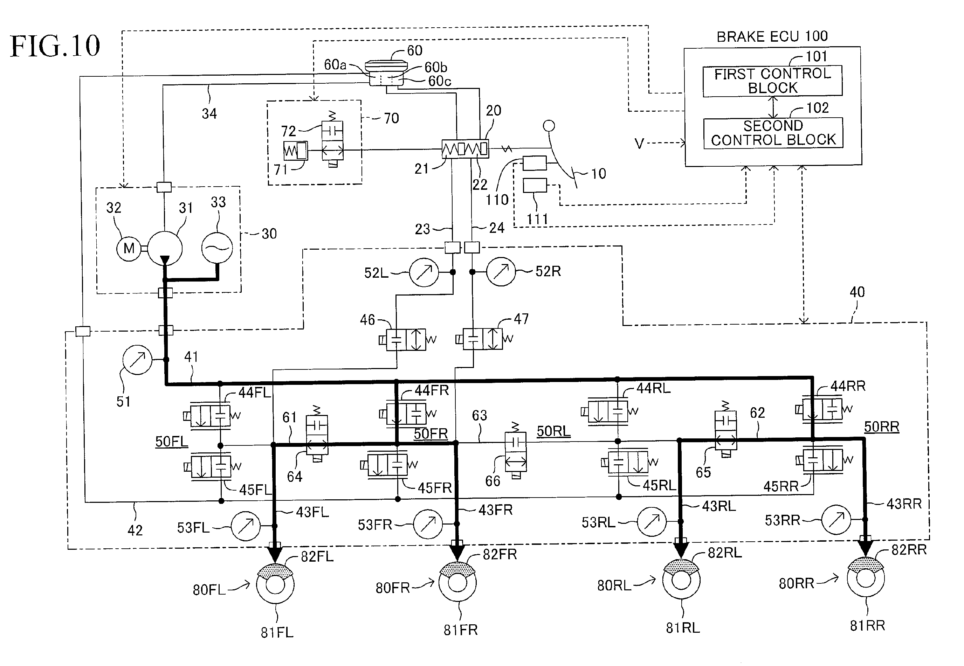

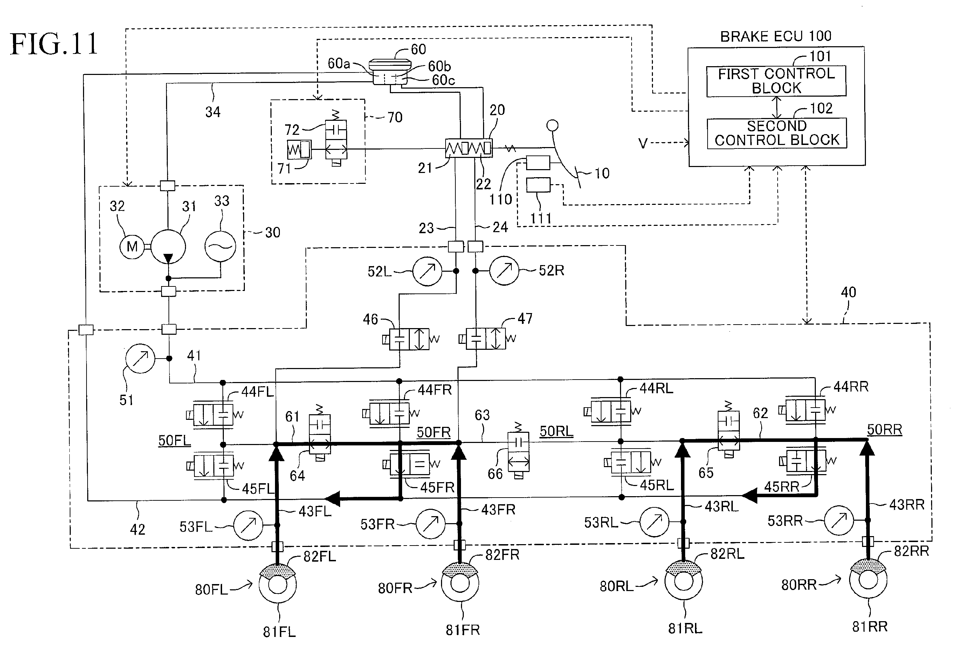

In the case where abnormality is detected in one or two of the front-wheel communication on-off valve 64, the rear-wheel communication on-off valve 65, and the front-rear communication on-off valve 66, the brake ECU 100 sets the communication mode to the partial communication mode, since the communication on-off valve from which abnormality is not detected can be kept opened. For example, when abnormality is detected only in the front-rear communication on-off valve 66, the brake ECU 100 stops energization of the front-rear communication on-off valve 66, and keeps the front-wheel communication on-off valve 64 and the rear-wheel communication on-off valve 65 opened as illustrated in FIGS. 10 and 11. With this operation, the wheel cylinders 82FL and 82FR for the front wheels are communicated with each other, and the wheel cylinders 82RL and 82RR for the rear wheels can be communicated with each other.

When determining in step S15 that the partial communication mode cannot be executed, the brake ECU 100 proceeds to step S17 to set the communication mode to the four-wheel separation mode. Therefore, in the case where the condition by which the four-wheel communication mode or the partial communication mode is set is not satisfied, the four-wheel separation mode is always set.

For example, when there is a possibility of a leakage of operating fluid, the four-wheel separation mode is set as the communication mode, so long as the detail of the abnormality is not included in the abnormality pattern specified by the partial communication allowable condition. In the case where abnormality is detected in at least one of the power hydraulic pressure generating device 30, the stroke simulator device 70, the master cut valves 46 and 47, the master cylinder pressure sensors 52L and 52R, the accumulator pressure sensor 51, and the pedal stroke sensor 110, the four-wheel separation mode is set as the communication mode. The four-wheel separation mode is of course set in the case where abnormality is detected in all of the pressure-increasing linear control valves 44, in all of the pressure-decreasing linear control valves 45, or in all of the communication on-off valves 64, 65, and 66.

In the four-wheel communication mode or the partial communication mode, all of the pressure-increasing linear control valves 44 or the pressure-decreasing linear control valves 45, which can be controlled, do not have to be simultaneously activated upon controlling the hydraulic pressures of the wheel cylinders 82 that are communicated with one another. Therefore, some of the pressure-increasing linear control valves 44 or some of the pressure-decreasing linear control valves 45 can be deactivated. With this, the number of the linear control valves to be activated can be reduced to reduce the occurrence of an operating noise. Even when abnormality occurs in some of the pressure-increasing linear control valves 44 or some of the pressure-decreasing linear control valves 45, the hydraulic control for all of the wheel cylinders 82 can be continued by using the pressure-increasing linear control valve 44 or the pressure-decreasing linear control valve 45 from which abnormality is not detected. Thus, capability to cope with the failure of the linear control valves can be enhanced.

The brake ECU 100 repeatedly executes the communication control routine described above in a predetermined short cycle. Therefore, the set communication mode is maintained, regardless of whether the brake pedal operation is performed or not.

### <Selection of linear control valve>

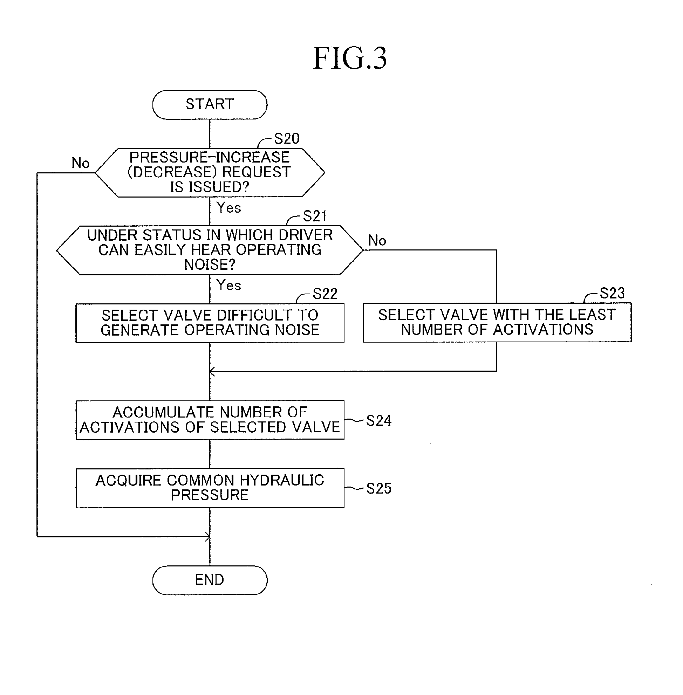

A method of selecting the pressure-increasing linear control valve 44 and the pressure-decreasing linear control valve 45 to be activated will be described. FIG. 3 illustrates a valve selection control routine executed by the microcomputer in the brake ECU 100. The microcomputer in the first control block 101 and the microcomputer in the second control block 102, which share information with each other, execute the valve selection control routine in cooperation with each other. However, it may be configured such that the microcomputer in either one of the control blocks preferentially executes this routine, and when something abnormal occurs in this control block, the microcomputer in the other control block executes this routine. Alternatively, a microcomputer exclusively used for the valve selection control may be provided, and this microcomputer exclusively used for the valve selection control may acquire information from the microcomputer in the first control block and the microcomputer in the second control block to execute the valve selection control routine.

The valve selection control routine is repeatedly executed in a predetermined short cycle in parallel with the communication control routine, when the communication mode is set to the four-wheel communication mode or to the partial communication mode. Here, the valve selection control routine will be described, supposing that the communication mode is set to the four-wheel communication mode. However, the similar process may be basically executed in the partial communication mode. The valve selection routine includes not only a process of selecting the pressure-increasing linear control valve 44 and the pressure-decreasing linear control valve 45 to be activated, but also a process of setting a hydraulic-pressure detection value used for the hydraulic control.

Firstly, the brake ECU 100 determines whether a pressure-increase request or a pressure-decrease request is outputted or not in step S20. The brake ECU 100 outputs a pressure-increase request in the case where the deviation (P* - Pw) between the target hydraulic pressure P* and the wheel cylinder pressure Pw is larger than a pressure-increase start threshold value during the execution of the hydraulic control of the wheel cylinder 82, and sets a target current of the pressure-increasing linear control valve 44 according to this deviation. In the case where the deviation (P* - Pw) between the target hydraulic pressure P* and the wheel cylinder pressure Pw is negative, the brake ECU 100 outputs a pressure-decrease request, and sets a target current of the pressure-decreasing linear control valve 45 according to this deviation, when the absolute value of the deviation is larger than a pressure-decrease start threshold value. The determination in step S20 is made by reading an instruction signal (pressure-increase request, pressure-decrease request) used in this hydraulic control.

When the pressure-increase request or the pressure-decrease request is not outputted, the brake ECU 100 ends the valve selection control routine. The valve selection control routine is repeatedly executed in a predetermined cycle. When the pressure-increase request or the pressure-decrease request is outputted in the repeatedly executed routine (S20: Yes), the brake ECU 100 determines in step S21 whether or not a driver is in a status in which he/she can easily hear an operating noise caused upon opening the linear control valve (the pressure-increasing linear control valve in the case of the pressure-increase request, the pressure-decreasing linear control valve in the case of the pressure-decrease request; they are referred to as the linear control valve 44 (45) below). In the present embodiment, the brake ECU 100 acquires vehicle speed information, and compares a speed V at this time and a threshold value Vref set beforehand. When the speed V is lower than the threshold value Vref, the brake ECU 100 determines that the driver is in a status in which he/she can easily hear the operating noise.

When determining that the driver is in the status in which he/she can easily hear the operating noise (S21: Yes), the brake ECU 100 selects the linear control valve 44 (45) that is difficult to generate an operating noise in step S22. The brake ECU 100 stores beforehand operating-noise information indicating which one of the four pressure-increasing linear control valves 44 and the four pressure-decreasing linear control valves 45 is difficult to generate an operating noise, and selects one linear control valve that is difficult to generate an operating noise out of the usable linear control valves 44 (45). For example, a normally closed solenoid linear control valve is more likely to generate an operating noise than a normally opened solenoid linear control valve. Therefore, out of the pressure-decreasing linear control valves 45, the pressure-decreasing linear control valves 45RL and 45RR for the rear-left and rear-right wheels correspond to a linear control valve that is difficult to generate an operating noise. In this case, either one of the pressure-decreasing linear control valves 45RL and 45RR may be selected in step S22. For example, the pressure-decreasing linear control valve 45RL and the pressure-decreasing linear control valve 45RR may alternately be selected every brake pedal operation.

The degree of an operating noise may be different depending on the length and disposed position of the individual passage 43 that is a hydraulic pressure passage from the liner control valve 44 (45) to the wheel cylinder 82. Therefore, which one of the four pressure-increasing linear control valves 44 that are a normally closed type is difficult to generate an operating noise can preliminarily be set. As for the pressure-increasing linear control valves 44, a valve that is difficult to generate an operating noise may not be set. Under the situation in which the pressure-increase request is outputted in this case, the brake ECU 100 may proceed to step S23 without making the determination about a status in step S21.

When determining in step S21 that the driver is not in the status in which he/she can easily hear an operating noise, the brake ECU 100 selects a valve, which is activated the least number of times, out of the usable linear control valves 44 (45) in step S23. The brake ECU 100 stores the accumulating number of activations in a non-volatile memory (not illustrated) for each linear control valve 44 (45) in step S24 described later. Therefore, in step S23, the brake ECU 100 reads the stored number of activations to select a linear control valve 44 (45) that can be used and that has the least number of activations. The number of activations may be defined as a number of times of opening the linear control valve 44 (45). When only one usable linear control valve 44 (45) (from which abnormality is not detected) is present, this linear control valve 44 (45) is selected in steps S22 and S23.

The linear control valve 44 (45) thus selected is activated as a control valve for performing the hydraulic control, while the non-selected linear control valves are deactivated.

The brake ECU 100 repeats the valve selection control routine in a predetermined short cycle, and during a period in which the pressure-increase request or a pressure-decrease request is outputted, the brake ECU 100 controls not to change the selected linear control valve 44 (45) during this period. Alternatively, during the period in which one brake operation is performed, the brake ECU 100 may control not to change the selected linear control valve 44 (45) during this period.

After selecting one of the linear control valves 44 (45) in step S22 or in step S23, the brake ECU 100 increments the number of activations of the selected linear control valve 44 (45) by "1 ", and stores the updated number of activations. The brake ECU 100 repeatedly performs the valve selection control routine in a predetermined short cycle, but after the number of activations is updated, the brake ECU 100 prevents this number of activations from being updated until this linear control valve 44 (45) is closed, i.e., until the output of the pressure-increase request or the pressure-decrease request is stopped. With this, the number of activations of the linear control valve 44 (45) can appropriately be accumulated.

Then, in step S25, the brake ECU 100 reads detection values of the usable hydraulic pressure sensors 53 (all hydraulic pressure sensors 53 from which abnormality is not detected), and acquires the common hydraulic pressure of the respective wheel cylinders 82 by using these detection values. This common hydraulic pressure indicates a common wheel cylinder pressure Pw used for the hydraulic control of the wheel cylinders 82 that are communicated with one another. The brake ECU 100 calculates an average value of the detection values of the usable hydraulic pressure sensors 53, for example, and sets the result of the calculation as a common hydraulic pressure. Alternatively, the brake ECU 100 calculates an average value of the detection values, excluding the maximum value and the minimum value, of the usable hydraulic pressure sensors 53, and sets the result of the calculation as a common hydraulic pressure.

After executing the process in step S25, the brake ECU 100 ends the valve selection control routine. The brake ECU 100 then repeatedly executes the valve selection control routine in a predetermined cycle.

### <First modification of the valve selection control routine>

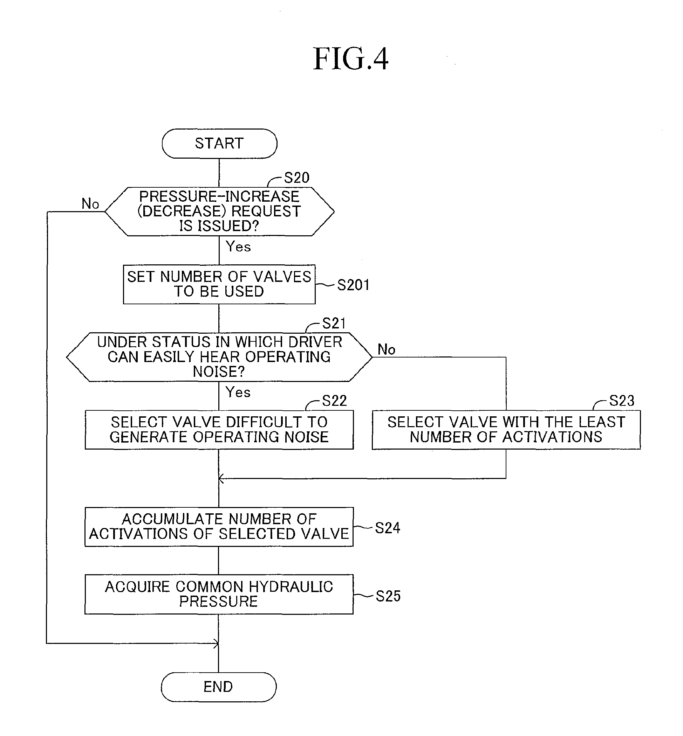

In the valve selection control routine described above, one of the pressure-increasing linear control valves 44 and one of the pressure-decreasing linear control valves 45 are activated. However, plural valves may be used in combination. For example, as illustrated in FIG. 4, a number-of-valves-to-be-used setting process (step S201) may be added between step S20 and step S21. It is preferable that the number of linear control valves 44 (45) to be used is increased, as the total necessary flow rate of the operating fluid supplied to the respective wheel cylinders 82 from the power hydraulic pressure generating device 30 is larger. Therefore, in the number-of-valves-to-be-used setting process in step S201, the number of linear control valves 44 (45) to be used is increased, as the absolute value of the deviation (P* - Pw) between the common target hydraulic pressure P* and the common hydraulic pressure Pw is larger. The brake ECU 100 stores beforehand association information by which the absolute value of the deviation (P* - Pw) and the number of linear control valves 44 (45) to be used are associated with each other. In step S201, the brake ECU 100 reads the deviation (P* - Pw) calculated during the hydraulic control, and sets the number of linear control valves 44 (45) to be used corresponding to the deviation (P* - Pw) by referring to the association information. In step S22, the brake ECU 100 selects the linear control valves 44 (45) to be used in the number set as described above in such a manner that the selected linear control valves preferentially include the linear control valve 44 (45) that is difficult to generate an operating noise. In step S23, the brake ECU 100 selects the linear control valves 44 (45) in the number set as described above in such a manner that the selected linear control valves preferentially include the linear control valve 44 (45) with less number of activation, i.e., the brake ECU 100 selects the linear control valves 44 (45) in ascending order in the number of activation.

### <Second modification of valve selection control routine>

In the valve selection control routine described above, the number of activations of the linear control valve 44 (45) is equalized. However, instead of this configuration, the activation time of the linear control valve 44 (45) may be equalized. In this case, the brake ECU 100 selects a linear control valve having the minimum activation time from the usable linear control valves 44 (45) in step S23, and in step S24, the brake ECU 100 increments the activation time of the selected linear control valve 44 (45) by "1", and stores this updated value. In this case, the brake ECU 100 may increment this activation time during the period in which the pressure-increase request or the pressure-decrease request is outputted.

### <Third Modification of valve selection control routine>

In the above valve selection control routine, the brake ECU 100 calculates a common hydraulic pressure by using the detection values of plural usable hydraulic pressure sensors 53 in step S25. However, it is not always necessary to calculate a common hydraulic pressure from the detection values of plural hydraulic pressure sensors 53. For example, a detection value of any one of the hydraulic pressure sensors may be set as a common hydraulic pressure. In this case, a detection value of a hydraulic pressure sensor 53 different from the hydraulic pressure sensor for the wheel corresponding to the linear control valve 44 (45) to be activated may be set as a common hydraulic pressure. For example, the detection value of the hydraulic pressure sensor 53 provided most apart from the linear control valve 44 (45) to be activated may be set as a common hydraulic pressure. The detection value of the hydraulic pressure sensor 53 provided most apart from the linear control valve 44 (45) is likely to be a small value during an increase in pressure. Therefore, braking force can surely be generated by setting this detection value as a common hydraulic pressure.

### <Hydraulic control>

When performing the hydraulic control for the wheel cylinders 82 in the four-wheel communication mode, the brake ECU 100 activates only the linear control valve 44 (45) selected in step S22 or step S23 to set a target current i* of the linear control valve 44 (45) so as to allow the common hydraulic pressure Pw set in step S25 to follow the common hydraulic pressure P*. For example, a target current ia* of the pressure-increasing linear control valve 44 during an increase in pressure is calculated by adding a value, which is obtained by multiplying a deviation between the common target hydraulic pressure P* and the common hydraulic pressure Pw by a feedback gain Gfba, to a valve-opening current i open a of the pressure-increasing linear control valve 44 to be activated (ia* = i open a + Gfba · (P* - Pw)). A target current ib* of the pressure-decreasing linear control valve 45 during a decrease in pressure is calculated by adding a value, which is obtained by multiplying a deviation between the common target hydraulic pressure P* and the common hydraulic pressure Pw by a feedback gain Gfbb, to a valve-opening current i open b of the pressure-decreasing linear control valve 45 to be activated (ib* = i open b + Gfbb · (P* - Pw)). These feedback gains Gfba and Gfbb are set to be different values for the feedback gains for independently controlling the hydraulic pressure of each of four wheels. Specifically, when the hydraulic pressures of the wheel cylinders 82 of four wheels are controlled by activating some of the linear control valves 44 (45), the flow rate of the operating fluid flowing from the linear control valve 44 (45) is increased, and therefore, the feedback gains Gfba and Gfbb according to this flow rate are set. For the calculation of the target current, a feed forward control may be employed, instead of the feedback control. Alternatively, the feedback control and the feed forward control may be combined.

### <Flow path of operating fluid>

In the four-wheel communication mode, the hydraulic pressures of all wheel cylinders 82 are commonly controlled by the energization control of some of the linear control valves 44 (45). The flow path of the operating fluid in the four-wheel communication mode will be described. FIG. 6 illustrates a flow path of operating fluid when the hydraulic control (for pressure-increase) is executed in the four-wheel communication mode. This case illustrates a flow path upon increasing the hydraulic pressure of each wheel cylinder 82 by using only the pressure-increasing linear control valve 44FR for the front-right wheel. FIG. 7 illustrates a flow path of operating fluid when the hydraulic control (for pressure-decrease) is executed in the four-wheel communication mode. This case illustrates a flow path upon decreasing the hydraulic pressure of each wheel cylinder 82 by using only the pressure-decreasing linear control valve 45RL for the rear-left wheel. As described above, in the four-wheel communication mode, the hydraulic pressures of the wheel cylinders 82 are controlled by the linear control valve 44 (45) selected in the valve selection control routine.

Even in the partial communication mode, the hydraulic pressures can be controlled by the linear control valves 44 (45) in the number less than the number of the wheel cylinders 82. For example, when abnormality occurs in the first control block 101 controlling the hydraulic pressures of the wheel cylinder 82FL for the front-left wheel and the wheel cylinder 82RR for the rear-right wheel, the wheel cylinder 82RR for the rear-right wheel is excluded from the subject to which the hydraulic control is performed, and the rear-wheel communication on-off valve 65 is kept closed. In this case, upon increasing a pressure, the brake ECU 100 increases the hydraulic pressures of the three wheel cylinders 82FL, 82FR, and 82RL by using the pressure-increasing linear control valve 44RL (44FR may be used) that is one of the pressure-increasing linear control valves in the second control block 102 as illustrated in FIG. 8, and upon decreasing a pressure, the brake ECU 100 decreases the hydraulic pressures of the three wheel cylinders 82FL, 82FR, and 82RL by using the pressure-decreasing linear control valve 45RL (45FR may be used) that is one of the pressure-decreasing linear control valves in the second control block 102 as illustrated in FIG. 9.

When abnormality is detected in only the front-rear communication on-off valve 66, for example, the brake ECU 100 increases the hydraulic pressures of the wheel cylinders 82FL and 82FR for the front wheels by using the pressure-increasing linear control valve 44FR (44FL may be used), and increases the hydraulic pressures of the wheel cylinders 82RL and 82RR for the rear wheels by using the pressure-increasing linear control valve 44RR (44RL may be used) as illustrated in FIG. 10, during a pressure increase. During a pressure decrease, the brake ECU 100 decreases the hydraulic pressures of the wheel cylinders 82FL and 82FR for the front wheels by using the pressure-decreasing linear control valve 45FR (45FL may be used), and decreases the hydraulic pressures of the wheel cylinders 82RL and 82RR for the rear wheels by using the pressure-decreasing linear control valve 45RR (45RL may be used) as illustrated in FIG. 11.

In the four-wheel separation mode, all of the front-wheel communication on-off valve 64, the rear-wheel communication on-off valve 65, and the front-rear communication on-off valve 66 are kept closed. For example, when abnormality is not detected in the brake control device, and the target hydraulic pressures of the four wheel cylinders 82 are not set to be the same value, the brake ECU 100 increases the hydraulic pressures of the four wheel cylinders 82 by individually controlling the four pressure-increasing linear control valves 44 during a pressure increase as illustrated in FIG. 12, and during a pressure decrease, the brake ECU 100 decreases the hydraulic pressures of the four wheel cylinders 82 by individually controlling the four pressure-decreasing linear control valves 45 as illustrated in FIG. 13.

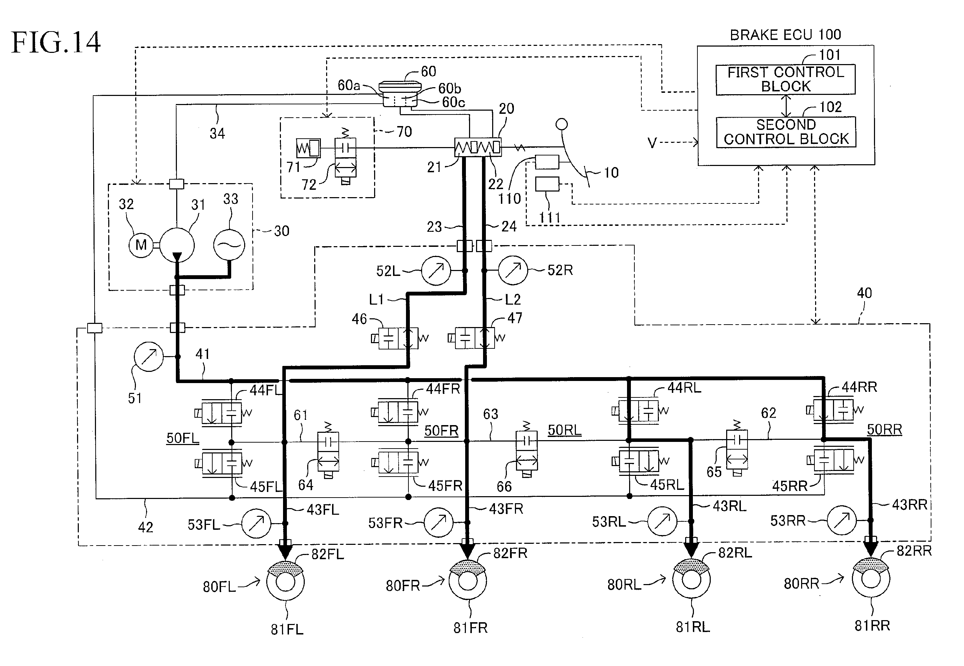

When there is a possibility of a leakage of operating fluid, the communication mode is set to the four-wheel separation mode, so long as the wheel cylinder 82 from which the operating fluid leaks cannot be specified. In this case, the brake ECU 100 opens the master cut valves 46 and 47 as illustrated in FIG. 14. With this, the wheel cylinder 82FL for the front-left wheel and the pressure chamber 21 are communicated with each other, and the wheel cylinder 82FR for the front-right wheel and the pressure chamber 22 are communicated with each other. The brake ECU 100 also keeps the pressure-increasing linear control valves 44FL and 44FR and the pressure-decreasing linear control valves 45FL and 45FR closed. Thus, a pedal effort hydraulic path L1 composed of the master passage 23 and the individual passage 43FL are opened, and a pedal effort hydraulic path L2 composed of the master passage 24 and the individual passage 43FR is opened. These pedal effort hydraulic paths L1 and L2 are isolated from the other paths, and forms an independent brake system. The brake ECU 100 also closes the simulator cut valve 72. With this, the master cylinder 20 generates a hydraulic pressure (pedal effort hydraulic pressure) by using driver's depression force of the brake pedal, and this hydraulic pressure is supplied to the wheel cylinders 82FL and 82FR for the front wheels, whereby braking force according to the driver's brake pedal operation can be generated. The brake ECU 100 also executes the hydraulic control for the wheel cylinders 82RL and 82RR for the rear wheels by activating the pressure-increasing linear control valves 44RL and 44RR and the pressure-decreasing linear control valves 45RL and 45RR. FIG. 14 illustrates the flow of operating fluid during the pressure increase. During the pressure decrease, the operating fluid is returned to the pressure chambers 21 and 22 from the wheel cylinders 82FL and 82FR for the front wheels, and the operating fluid is returned to the return passage 42 from the wheel cylinders 82RL and 82RR for the rear wheels via the pressure-decreasing linear control valves 45RL and 45RR.

The three brake systems can be separated from one another by forming the flow paths of the operating fluid as described above. Accordingly, even if a leakage of operating fluid occurs in only one brake system, the other brake systems can be prevented from being affected by this leakage.

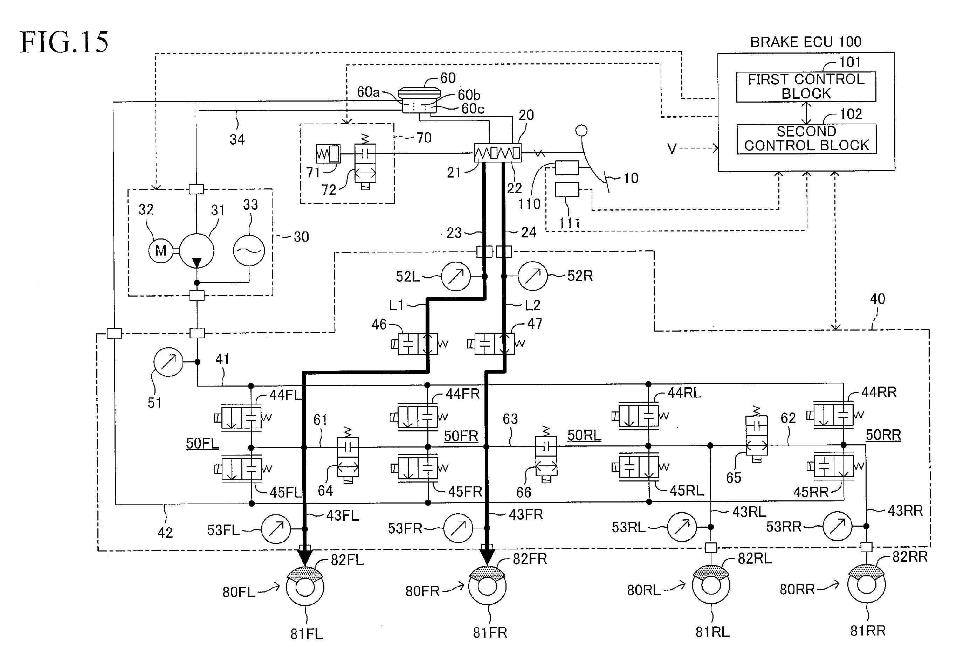

When the hydraulic control is disabled due to abnormality in the control system, energization of all electric actuators (control valves, motors) is stopped. In this case, as illustrated in FIG. 15, the master cut valves 46 and 47 that are a normally opened valve are opened to open the pedal effort hydraulic path L1 composed of the master passage 23 and the individual passage 43FL and the pedal effort hydraulic path L2 composed of the master passage 24 and the individual passage 43FR. These two pedal effort hydraulic paths L1 and L2 are isolated from the other paths, and each of them forms an independent brake system, since all valves (pressure-increasing linear control valves 44FL and 44FR, the pressure-decreasing linear control valves 45FL and 45FR, the front-wheel communication on-off valve 64, and the front-rear communication on-off valve 66) leading into each of the paths L1 and L2 are a normally closed valve.

With this state, the master cylinder 20 generates a hydraulic pressure (pedal effort hydraulic pressure) by using driver's depression force of the brake pedal, and this hydraulic pressure is supplied to the wheel cylinders 82FL and 82FR for the front wheel, whereby braking force according to the driver's brake pedal operation can be generated.

### <Normally close control of master cut valve>

In the brake control device according to the present embodiment, after being started, the brake ECU 100 continues energization of the master cut valves 46 and 47 to keep the master cut valves 46 and 47 closed during the period in which the four-wheel communication mode is selected, regardless of whether the brake request is issued or not, i.e., regardless of whether the brake pedal operation is performed or not by the driver. This prevents the master cut valves 46 and 47 from being opened and closed every time the brake pedal operation is performed, whereby the generation of the operating noise can be prevented.

Here, the reason why the master cut valves 46 and 47 are kept closed will be described. When the brake pedal operation is canceled, the brake ECU 100 ends the energization control of the pressure-increasing linear control valve 44 and the pressure-decreasing linear control valve 45. Therefore, the pressure-increasing linear control valve 44 and the pressure-decreasing linear control valve 45 are in the state illustrated in FIG. 1. In this case, the wheel cylinders 82RL and 82RR for the rear wheels keep communicated with the return passage 42, since the pressure-decreasing linear control valves 45RL and 45RR are a normally opened valve. On the other hand, the wheel cylinders 82FL and 82FR for the front wheels are not communicated with the return passage 42, since the pressure-decreasing linear control valves 45FL and 45FR are a normally closed valve. When the master cut valves 46 and 47 are kept closed in this case, the situation in which the hydraulic pressures of the wheel cylinders 82FL and 82FR for the front wheels cannot be decreased to a predetermined hydraulic pressure (this situation is referred to as a "remaining hydraulic pressure") might occur. In this case, the brake caliper is overheated. Therefore, in a conventional device, the master cut valves 46 and 47 are kept opened to cause the hydraulic pressures of the wheel cylinders 82FL and 82FR for the front wheels to be equal to the master cylinder pressure during the period in which the brake pedal operation is canceled.

On the other hand, in the brake control device according to the present embodiment, the four-wheel communication mode is continued regardless of whether the brake pedal operation is performed or not. Therefore, the wheel cylinders 82FL and 82FR for the front wheels can be communicated with the return passage 42 via the front-wheel left-right communication passage 61, the rear-wheel left-right communication passage 62, the front-rear communication passage 63, and the pressure-decreasing linear control valves 45RL and 45RR. With this configuration, the brake control device can prevent the generation of the operating noise of the master cut valves 46 and 47, while suppressing the remaining hydraulic pressure.

### <Pressure-decrease control upon pedal-cancel>

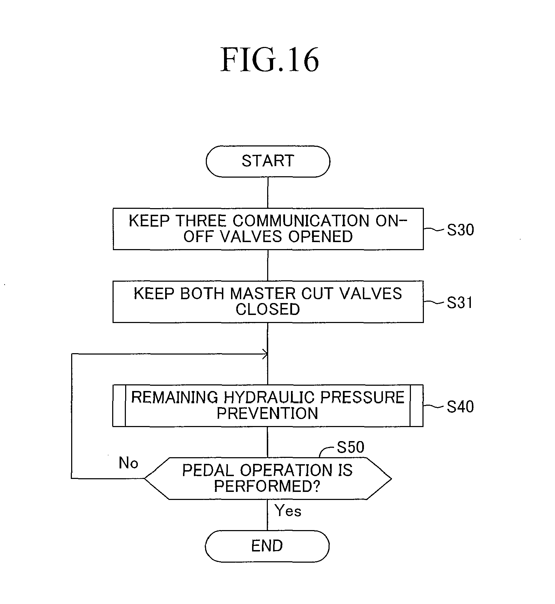

When the remaining hydraulic pressure might occur even if the four-wheel communication mode is executed, a pressure-decrease control upon pedal-cancel may be executed as described below. FIG. 16 illustrates a pressure-decrease control upon pedal-cancel routine executed by the brake ECU 100, when the four-wheel communication mode is set. The pressure-decrease control upon pedal-cancel routine is started when the brake pedal operation is canceled. When the pedal switch 111 is turned off, or when the pedal stroke detected by the pedal stroke sensor 110 is lower than a brake end threshold value, the brake ECU 100 determines that the brake pedal operation is canceled, and then, starts the pressure-decrease control upon pedal-cancel routine. After starting the pressure-decrease control upon pedal-cancel routine, the brake ECU 100 firstly keeps the front-wheel communication on-off valve 64, the rear-wheel communication on-off valve 65, and the front-rear communication on-off valve 66 opened in step S30, and keeps the master cut valves 46 and 47 closed in step S31. These processes in steps S30 and S31 mean that the operation during the execution of the brake pedal operation is continued even after the brake pedal operation is canceled. Accordingly, the four-wheel communication mode is continued with the master passages 23 and 24 being closed.

Subsequently, the brake ECU 100 executes a remaining hydraulic pressure prevention process in step S40. The remaining hydraulic pressure prevention process will be described later. After executing the remaining hydraulic pressure prevention process, the brake ECU 100 determines in step S50 whether the brake pedal operation is executed or not. During the period in which the brake pedal operation is not executed, the brake ECU 100 returns to step S40 to repeat the remaining hydraulic pressure prevention process. When the brake pedal operation is executed (S50: Yes), the brake ECU 100 ends the pressure-decrease control upon pedal-cancel routine.

### <First example of remaining hydraulic pressure prevention process>

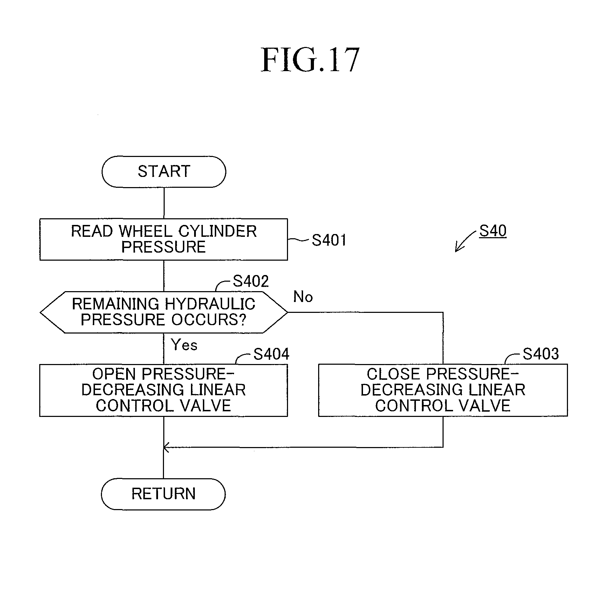

FIG. 17 is a flowchart illustrating a first embodiment of the remaining hydraulic pressure prevention control in step S40. After starting the remaining hydraulic pressure prevention routine, the brake ECU 100 reads the wheel cylinder pressures PwFL and PwFR for the front wheels detected by the hydraulic pressure sensors 53FL and 53FR in step S401. Then, the brake ECU 100 determines in step S402 whether a remaining hydraulic pressure occurs or not based on the wheel cylinder pressures PwFL and PwFR. For example, the brake ECU 100 compares the wheel cylinder pressures PwFL and PwFR and a remaining hydraulic pressure determination threshold values Pwref. When at least one of the wheel cylinder pressures PwFL and PwFR is larger than the remaining hydraulic pressure determination threshold values Pwref, the brake ECU 100 determines that the remaining hydraulic pressure occurs. When determining that the remaining hydraulic pressure does not occur (S402: No), the brake ECU 100 closes the pressure-decreasing linear control valves 45FL and 45FR in step S403. When the hydraulic control is ended, all of the linear control valves 44 and 45 are in a non-energized state. Therefore, the pressure-decreasing linear control valves 45FL and 45FR are closed. Accordingly, in step S403, the pressure-decreasing linear control valves 45FL and 45FR are kept closed.

On the other hand, when determining that the remaining hydraulic pressure occurs in at least one of the wheel cylinders 82FL and 82FR (S402: Yes), the brake ECU 100 opens the pressure-decreasing linear control valves 45FL and 45FR in step S404. After executing the process in step S303 or step S304, the brake ECU 100 proceeds to step S50 in the pressure-decrease control upon pedal-cancel routine that is a main routine. Such process is repeated in a predetermined cycle, and this can prevent the remaining hydraulic pressure from being continued, whereby the overheat of the brake caliper can be prevented.

In the process in step S404, only the pressure-decreasing linear control valve 45FL (45FR) corresponding to the wheel cylinder 82FL (82FR) from which the remaining hydraulic pressure is detected may be opened, only the pressure-decreasing linear control valve 45FR (45FL) opposite to the wheel cylinder 82FL (82FR) from which the remaining hydraulic pressure is detected may be opened, or both the pressure-decreasing linear control valves 45FL and 45FR may simultaneously be opened. Even when the remaining hydraulic pressure is detected in both of the left and right wheel cylinders 82FL and 82FR, only one (45FL (45FR)) of the pressure-decreasing linear control valves may be opened, or both pressure-decreasing linear control valves 45FL and 45FR may simultaneously be opened.

When the pressure-decreasing linear control valves 45FL and 45FR are easy to generate heat due to energization, the pressure-decreasing linear control valve 45FR and the pressure-decreasing linear control valve 45FL may alternately be opened. For example, when the remaining hydraulic pressure is detected, energization of one (45FL (45FR)) of the pressure-decreasing linear control valves is started in step S404. In the case where the remaining hydraulic pressure cannot be eliminated even if the energization continuation time of one energization exceeds a continuous energization limit time set beforehand (S402: Yes), a process of switching the energization to the other pressure-decreasing linear control valve 45FR (45FL) is repeated. Since the energization of the pressure-decreasing linear control valves 45FL and 45FR is alternately switched as described above, a cooling period for cooling the pressure-decreasing linear control valves 45FL and 45FR can be formed, whereby the generation of heat from the pressure-decreasing linear control valves 45FL and 45FR can be suppressed.

The timing of starting the remaining hydraulic pressure prevention routine may be somewhat delayed after the brake pedal operation is canceled. Specifically, the decrease in the hydraulic pressures of the wheel cylinders 82FL and 82FR for the front wheels due to the continuation of the four-wheel communication mode is waited, and when the remaining hydraulic pressure still occurs even after a set time elapses from the period at which the brake pedal operation is canceled, the brake ECU 100 may start the remaining hydraulic pressure prevention routine.

### <Second example of remaining hydraulic pressure prevention process>

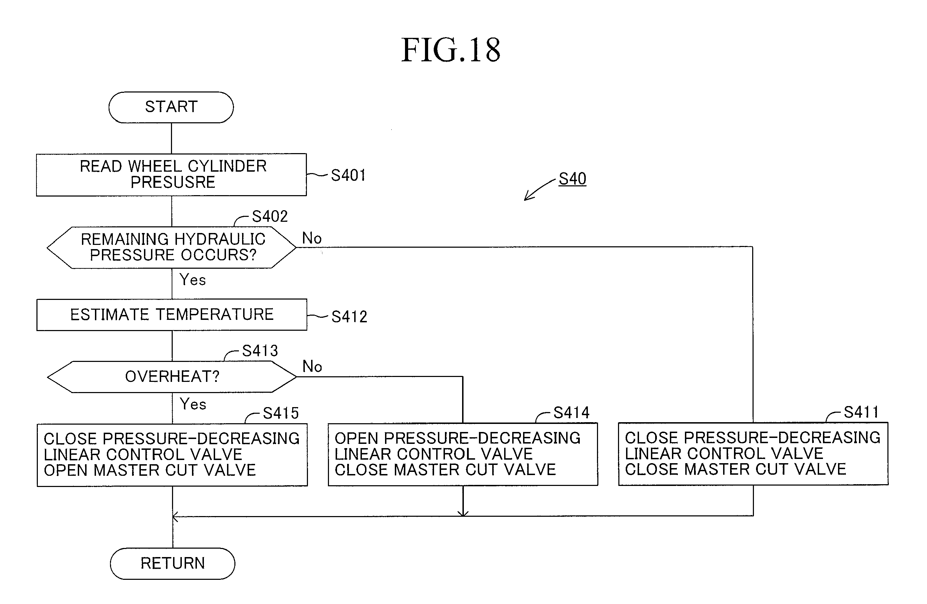

Next, a second embodiment of the remaining hydraulic pressure prevention control will be described. In this second embodiment, the remaining hydraulic pressure is prevented by opening the master cut valve 46 (47) in addition to the pressure-decreasing linear control valve 45FL (45FR). FIG. 18 is a flowchart illustrating the second embodiment related to the remaining hydraulic pressure prevention control in step S40. The processes same as those in the remaining hydraulic pressure prevention routine in FIG. 17 are identified by the same reference numerals, and these processes will merely briefly be described. After the remaining hydraulic pressure prevention routine is started, the brake ECU 100 reads the wheel cylinder pressures PwFL and PwFR for the front wheels in step S401. Then, the brake ECU 100 determines in step S402 whether a remaining hydraulic pressure occurs or not based on the wheel cylinder pressures PwFL and PwFR. When determining that the remaining hydraulic pressure does not occur (S402: No), the brake ECU 100 closes the pressure-decreasing linear control valves 45FL and 45FR and the master cut valves 46 and 47 in step S411. When the hydraulic control is ended, all of the linear control valves 44 and 45 are in a non-energized state. Therefore, the pressure-decreasing linear control valves 45FL and 45FR are closed. Accordingly, in step S411, the pressure-decreasing linear control valves 45FL and 45FR are kept closed. In addition, the master cut valves 46 and 47 are kept closed.

On the other hand, when determining that the remaining hydraulic pressure occurs in at least one of the wheel cylinders 82FL and 82FR (S402: Yes), the brake ECU 100 estimates a temperature of the pressure-decreasing linear control valve 45FL (45FR) corresponding to the wheel cylinder 82FL (82FR) on which the remaining hydraulic pressure occurs in step S412, and in next step S413, the brake ECU 100 determines whether the estimated temperature exceeds an overheat prevention threshold value or not. The estimated temperature can be calculated by using an integration value of a target current of the pressure-decreasing linear control valve 45FL (45FR), for example. In the case where the estimated temperature does not exceed the overheat prevention threshold value (S413: No), i.e., in the case where there is no fear of overheat of the pressure-decreasing linear control valve 45FL (45FR), the brake ECU 100 opens the pressure-decreasing linear control valve 45FL (45FR) corresponding to the wheel cylinder 82FL (82FR) on which the remaining hydraulic pressure occurs, and closes the master cut valves 46 and 47 in step S414. The remaining hydraulic pressure may be prevented by opening both the pressure-decreasing linear control valves 45FL and 45FR. In this case, the process in step S414 may be executed when the estimated temperatures of both pressure-decreasing linear control valves 45FL and 45FR do not exceed the overheat prevention threshold value. When the remaining hydraulic pressure occurs on both the wheel cylinders 82FL and 82FR, the brake ECU 100 may determine "Yes" in step S413 when the estimated temperature of at least one of the pressure-decreasing linear control valves 45FL and 45FR exceeds the overheat prevention threshold value.

The brake ECU 100 repeats such process. In the case where the estimated temperature of the pressure-decreasing linear control valve 45FL (45FR) corresponding to the wheel cylinder 82FL on which the remaining hydraulic pressure occurs exceeds the overheat prevention threshold value, the brake ECU 100 proceeds to step S415. In step S415, the brake ECU 100 stops the energization of the pressure-decreasing linear control valve 45FL (45FR) to close the pressure-decreasing linear control valve 45FL (45FR), and stops energization of the master cut valve 46 (47) corresponding to the wheel cylinder 82FL (82FR) on which the remaining hydraulic pressure occurs to open the master cut valve 46 (47). The master cut valve 46 (47) corresponding to the wheel cylinder 82FL (82FR) on which the remaining hydraulic pressure occurs means the master cut valve 46 (47) provided on the master passage 23 (24) connected to the wheel cylinder 82FL (82FR) on which the remaining hydraulic pressure occurs. With this control, the wheel cylinder 82FL (82FR) on which the remaining hydraulic pressure occurs and the master cylinder 20 are communicated with each other, whereby the wheel cylinder pressure can be decreased. In addition, overheat of the pressure-decreasing linear control valve 45FL (45FR) can be prevented. The other master cut valve 47 (46) may simultaneously be opened in addition to the master cut valve 46 (47) corresponding to the wheel cylinder 82FL (82FR) on which the remaining hydraulic pressure occurs.

### <Third example of remaining hydraulic pressure prevention process>

Next, a third embodiment of the remaining hydraulic pressure prevention process will be described. In the third embodiment, the remaining hydraulic pressure is basically prevented by opening the master cut valve 46 (47), and this third embodiment is configured to solve a trouble caused by jammed contaminants in the pressure-increasing linear control valve 44. It is supposed that contaminants are jammed in the pressure-increasing linear control valve 44. In this case, when the master cut valve 46 (47) is opened upon the detection of the remaining hydraulic pressure, and then, the master cut valve 46 (47) is closed after that, the operating fluid is flown into the wheel cylinder 82 from the pressure-increasing linear control valve 44 to again cause the remaining hydraulic pressure. In such case, the master cut valve 46 (47) is repeatedly opened and closed. The third embodiment is configured to solve the trouble described above.

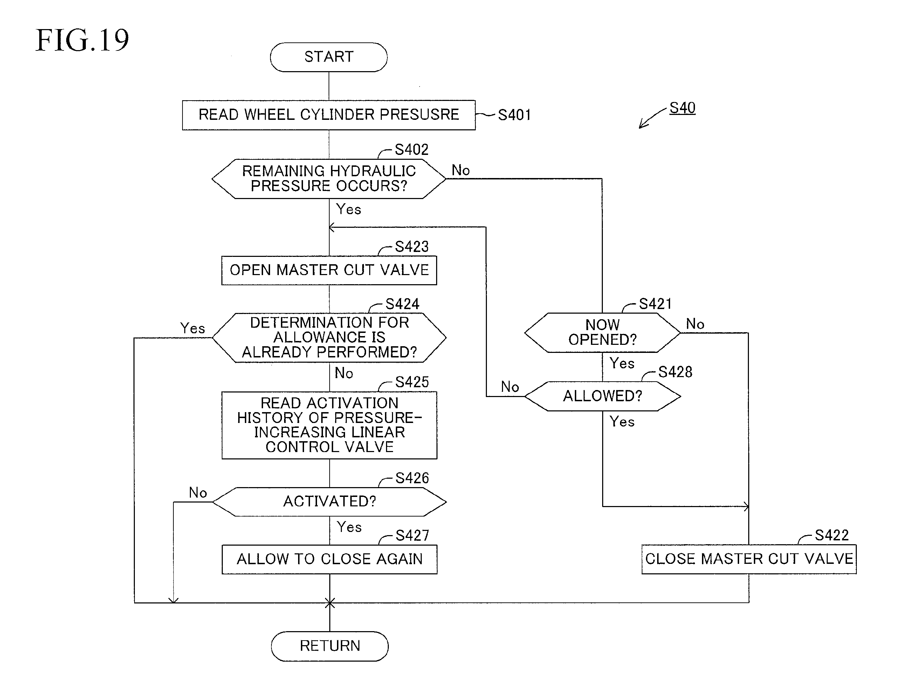

FIG. 19 is a flowchart illustrating the third embodiment involved with the remaining hydraulic pressure prevention process in step S40. The processes same as those in the remaining hydraulic pressure prevention routine in FIG. 17 are identified by the same reference numerals, and these processes will merely briefly be described. After the remaining hydraulic pressure prevention routine is started, the brake ECU 100 reads the wheel cylinder pressures PwFL and PwFR for the front wheels in step S401. Then, the brake ECU 100 determines in step S402 whether a remaining hydraulic pressure occurs or not based on the wheel cylinder pressures PwFL and PwFR. When determining that the remaining hydraulic pressure does not occur (S402: No), the brake ECU 100 determines in step S421 whether the master cut valves 46 and 47 are now opened or not. Just after the remaining hydraulic pressure prevention routine is started, the master cut valves 46 and 47 are closed. Therefore, the brake ECU 100 determines "No", and keeps the master cut valves 46 and 47 closed in step S422.

On the other hand, when determining that the remaining hydraulic pressure occurs on at least one of the wheel cylinders 82FL and 82FR (S402: Yes), the brake ECU 100 opens the master cut valve 46 (47) corresponding to the wheel cylinder 82FL (82FR) on which the remaining hydraulic pressure occurs in step S423. The brake ECU 100 may also open the other master cut valve 47 (46) in addition to the master cut valve 46 (47) corresponding to the wheel cylinder 82FL (82FR) on which the remaining hydraulic pressure occurs.

Then, in step S424, the brake ECU 100 determines whether a determination for an allowance of again closing the valve is already executed or not. The determination for an allowance of again closing the valve is executed in step S426 described later. Therefore, in the first determination process in step S424, the determination becomes "No". In this case, the brake ECU 100 reads activation history information of all pressure-increasing linear control valves 44 during the latest predetermined hydraulic control period in step S425, and then, determines in step S426 whether or not all pressure-increasing linear control valves 44 are opened once or more during the latest predetermined hydraulic control period. The latest predetermined hydraulic control period is a hydraulic control period set beforehand, and it can be specified as a hydraulic control period corresponding to N (N ≥ 1) times of the latest brake pedal operation, or a hydraulic control period corresponding to the latest T times.

The brake ECU 100 stores the accumulated number of activations of all pressure-increasing linear control valves 44 and all pressure-decreasing linear control valves 45 in step S24 in the valve selection control routine described above. Therefore, the brake ECU 100 can acquire the number of activations of the pressure-increasing linear control valves 44 and the pressure-decreasing linear control valves 45 during the latest predetermined hydraulic control period by reading the stored number of activations as activation history information. When determining in step S426 that all pressure-increasing linear control valves 44 are opened once or more during the latest predetermined hydraulic control period, the brake ECU 100 sets a close-again allowance flag in step S427. On the other hand, when there is at least one pressure-increasing linear control valve 44 that is never opened during the latest predetermined hydraulic control period, the brake ECU 100 skips the process in step S427. Specifically, the brake ECU 100 does not set the close-again allowance flag. It is to be noted that this close-again allowance flag is reset just after the remaining hydraulic pressure prevention routine is started.

During the period in which the remaining hydraulic pressure occurs on at least one of the wheel cylinders 82FL (82FR), the master cut valve 46 (47) keeps opened. However, after the determination for an allowance of again closing the valve (S426) is performed, the determination in step S424 becomes "Yes", so that the processes in steps S425 to S427 are skipped. When the hydraulic pressure of the wheel cylinder 82FL (82FR) is decreased since the master cut valve 46 (47) is opened, and hence, the remaining hydraulic pressure is eliminated (S402: No), the brake ECU 100 determines whether the master cut valve 46 (47) is now opened or not in step S421. In this case, the master cut valve 46 (47) is now opened, so that the brake ECU 100 determines whether the close-again allowance flag is set or not in step S428. When the close-again allowance flag is set, the brake ECU 100 proceeds to step S422 to close the master cut valve 46 (47). On the other hand, when the close-again allowance flag is not set, the brake ECU 100 proceeds to step S423. Therefore, the master cut valve 46 (47) is kept opened.

According to the remaining hydraulic pressure prevention routine according to the third embodiment, in the case where there is a record indicating that all pressure-increasing linear control valves 44 are opened once or more during the latest predetermined hydraulic control period, the brake ECU 100 allows the master cut valve 46 (47) to be again closed at the point at which the remaining hydraulic pressure is eliminated after the master cut valve 46 (47) is opened due to the detection of the remaining hydraulic pressure. When the linear control valves 44 and 45 have jammed contaminants (contaminants are held between the valve element and the valve seat), operating fluid is flown from this gap. Therefore, when the master cut valve 46 (47) is again closed because the remaining hydraulic pressure is eliminated, the hydraulic pressure of the wheel cylinder increases, resulting in that the remaining hydraulic pressure might be generated again. In this case, the master cut valve 46 (47) is repeatedly opened and closed. However, the jammed contaminants are likely to be eliminated by the opening action of the linear control valves 44 and 45. In view of this, in the third embodiment, the case in which all of the pressure-increasing linear control valves 44 are opened at least once during the latest hydraulic control is regarded as the case in which jammed contaminants are not generated. Accordingly, the brake ECU 100 allows the master cut valve 46 (47) to be closed again. When there is a pressure-increasing linear control valve 44 that is never opened, the brake ECU 100 inhibits the master cut valve 46 (47) from being closed again. With this operation, the brake ECU 100 can prevent the undesirable situation in which the master cut valve 46 (47) is repeatedly opened and closed. As a result, quietness can be enhanced.

In the third embodiment, the brake ECU 100 performs the determination for an allowance of again closing the master cut valve 46 (47) based on the activation history of all pressure-increasing linear control valves 44. However, in the case where there is no chance of the occurrence of the remaining hydraulic pressure on the wheel cylinders 82FL and 82FR for the front wheels even if jammed contaminants are generated in the pressure-increasing linear control valves 44RL and 44RR for adjusting the hydraulic pressures of the wheel cylinders 82 of the rear wheels, the brake ECU 100 may perform this determination based on the activation history of only the pressure-increasing linear control valves 44FL and 44FR for adjusting the hydraulic pressures of the wheel cylinders 82FL and 82FR for the front wheels. Specifically, when determining that these pressure-increasing linear control valves 44FL and 44FR are opened at least once or more, the brake ECU 100 may set the close-again allowance flag in step S427.

### <Fourth example of remaining hydraulic pressure prevention process>

Next, a fourth embodiment of the remaining hydraulic pressure prevention process will be described. In the fourth embodiment, the remaining hydraulic pressure is basically prevented by opening the master cut valve 46 (47), and this fourth embodiment additionally executes a process of removing jammed contaminants in the pressure-increasing linear control valve 44.

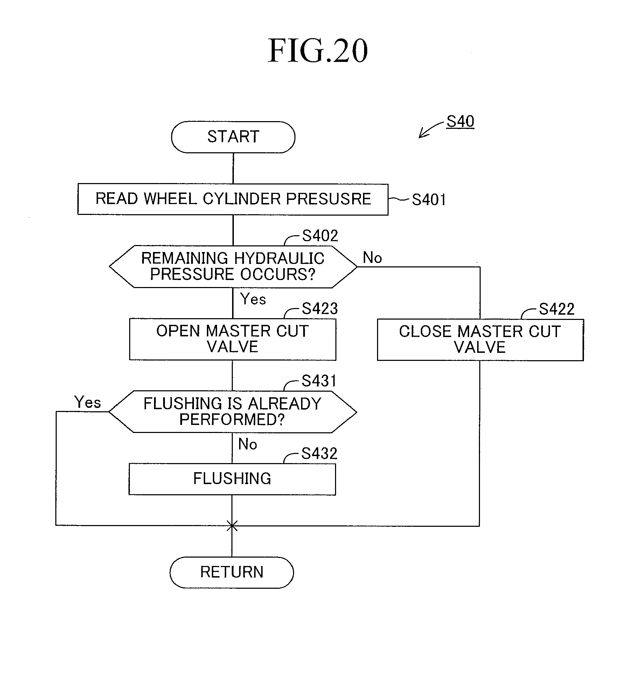

FIG. 20 is a flowchart illustrating the fourth embodiment involved with the remaining hydraulic pressure prevention process in step S40. The processes same as those in the remaining hydraulic pressure prevention routine in FIG. 19 are identified by the same reference numerals, and these processes will merely briefly be described. After the remaining hydraulic pressure prevention routine is started, the brake ECU 100 reads the wheel cylinder pressures PwFL and PwFR for the front wheels in step S401. Then, the brake ECU 100 determines in step S402 whether a remaining hydraulic pressure occurs or not based on the wheel cylinder pressures PwFL and PwFR. When determining that the remaining hydraulic pressure does not occur (S402: No), the brake ECU 100 keeps the master cut valves 46 and 47 closed.

On the other hand, when determining that the remaining hydraulic pressure occurs on at least one of the wheel cylinders 82FL and 82FR (S402: Yes), the brake ECU 100 opens the master cut valve 46 (47) corresponding to the wheel cylinder 82FL (82FR) on which the remaining hydraulic pressure occurs. The brake ECU 100 may also open the other master cut valve 47 (46) in addition to the master cut valve 46 (47) corresponding to the wheel cylinder 82FL (82FR) on which the remaining hydraulic pressure occurs.

Then, the brake ECU 100 determines in step S413 whether flushing of the pressure-increasing linear control valve 44 is already executed or not. The flushing is a process of temporarily opening a control valve to flush out contaminants jammed in the valve. The remaining hydraulic pressure prevention routine is repeatedly executed in a predetermined cycle during the period in which the brake pedal operation is canceled. Therefore, just after the brake pedal operation is canceled, flushing is not yet executed. Accordingly, the brake ECU 100 executes flushing of all pressure-increasing linear control valves 44 in step S432. In this case, all pressure-increasing linear control valves 44 are instantaneously opened with all pressure-decreasing linear control valves 45 being opened.

The brake ECU 100 repeatedly executes the remaining hydraulic pressure prevention routine in a predetermined cycle, and after executing the flushing, the brake ECU 100 determines "Yes" in step S431, and skips the flushing process in step S432. In this way, the remaining hydraulic pressure prevention process by the master cut valve 46 (47) is continued under the situation in which the contaminants removing process is executed. This configuration can prevent the undesirable situation in which the master cut valve 46 (47) is repeatedly opened and closed. As a result, quietness can be enhanced. In the case where there is no chance of the occurrence of the remaining hydraulic pressure on the wheel cylinders 82FL and 82FR for the front wheels even if jammed contaminants are generated in the pressure-increasing linear control valves 44RL and 44RR for adjusting the hydraulic pressures of the wheel cylinders 82 for the rear wheels, the brake ECU 100 may execute flushing only for the pressure-increasing linear control valves 44FL and 44FR for adjusting the hydraulic pressures of the wheel cylinders 82FL and 82FR for the front wheels.

### <Operation and effect of embodiments>

The vehicle brake control device according to the embodiments of the present invention described above provides operation and effects described below.
1. The wheel cylinders 82 for four wheels are kept communicated with one another during a normal brake control. With this configuration, the hydraulic pressures of the wheel cylinders 82 for four wheels can be controlled by deactivating some of the linear control valves 44 (45) and activating the remaining linear control valves 44 (45). This configuration can reduce the number of occurrence of an operating noise from all linear control valves 44 (45). In addition, the number of the wheel cylinders 82 to be controlled becomes larger than the number of the linear control valves 44 (45) to be activated. Therefore, the amount of operating fluid absorbing the pulsation in the operating fluid generated upon opening the valve is increased, whereby loudness of the operating noise can be reduced. When it is determined that a driver is in the status in which he/she can easily hear an operating noise, the linear control valve 44 (45) is switched to the one, which is set beforehand and which is difficult to generate the operating noise, whereby uncomfortable feeling caused by the activation of the linear control valves 44 (45) and provided to the driver can be reduced. Consequently, quietness during the normal brake control can be enhanced.
2. Even when abnormality is detected in some of the linear control valves 44 (45), the four-wheel communication mode is continued, or the communication mode is switched to the partial communication mode according to the abnormal portion. Therefore, the hydraulic control can be continued by using the linear control valves 44 (45) other than the linear control valve 44 (45) from which abnormality is detected. Even when abnormality is detected in some of the hydraulic pressure sensors 53, the four-wheel communication mode is continued. Therefore, the hydraulic control can be continued by using the hydraulic pressure sensor 53 other than the hydraulic pressure sensor 53 from which abnormality is detected. With this, capability to cope with failure can be enhanced. In addition, quietness can also be enhanced during the hydraulic control for the wheel cylinders 82 in this case.
3. Even when abnormality is detected in one or two of the front-wheel communication on-off valve 64, the rear-wheel communication on-off valve 65, and the front-rear communication on-off valve 66, the partial communication mode is set. Therefore, the number of the linear control valves 44 (45) to be activated can be reduced, resulting in that the number of occurrences of the operating noise can be reduced. Even when abnormality is detected in some of the linear control valves 44 (45), the hydraulic control can be continued by using the linear control valves 44 (45) other than the linear control valve 44 (45) from which the abnormality is detected.
4. In the four-wheel communication mode or the partial communication mode, the linear control valve 44 (45) to be activated is selected such that the number of activations or activation time is equalized. Therefore, the life of the linear control valves 44 (45) can appropriately be prolonged as a whole.
5. The brake control device is configured to acquire a common hydraulic pressure of the wheel cylinders 82 by using the detection values of the plural hydraulic pressure sensors 53. Therefore, even if each of the detection values varies, an appropriate detection value can be set as the common hydraulic pressure. Accordingly, an accurate hydraulic control can be executed.
6. The front-wheel communication on-off valve 64 and the front-rear communication on-off valve 66, which are provided on the communication passage allowing communication among the four wheel cylinders 82, are a normally closed solenoid valve, while the rear-wheel communication on-off valve 65 is a normally opened solenoid valve. Therefore, the brake control device can solve the trouble caused by a leakage of operating fluid as well as reduce power consumption.
7. The front-rear communication passage 63 is formed to allow communication between the wheel cylinders 82 of the diagonal wheels. This configuration can prevent the generation of a difference between the hydraulic pressures of the wheel cylinders 82 for the left and right wheels.
8. The master cut valves 46 and 47 are kept closed, regardless of whether or not the brake pedal operation is performed by a driver. Therefore, the master cut valves 46 and 47 are not opened and closed every brake pedal operation, whereby the occurrence of an operating noise can be prevented. Accordingly, quietness can further be enhanced. In this case, the four-wheel communication mode is continued regardless of whether the brake pedal operation is performed or not. Therefore, the brake control device can prevent the occurrence of an operating noise from the master cut valves 46 and 47, while suppressing the remaining hydraulic pressure.
9. In the case where the remaining hydraulic pressure is detected even when the four-wheel communication mode is set, the remaining hydraulic pressure prevention process is executed, whereby overheat of the brake caliper can be prevented. In this case, when the energization of the pressure-decreasing linear control valves 45FL and 45FR is alternately switched, a cooling period for cooling the pressure-decreasing linear control valves 45FL and 45FR can be formed, whereby the generation of heat from the pressure-decreasing linear control valves 45FL and 45FR can be suppressed. In the case where the estimated temperature of the pressure-decreasing linear control valve 45FL (45FR) exceeds the overheat prevention threshold value, the pressure-decreasing linear control valve 45FL (45FR) is closed, and the master cut valve 46 (47) is opened. Therefore, the brake control device can reduce the wheel cylinder pressure, while suppressing the generation of heat from the pressure-decreasing linear control valves 45FL and 45FR.
10. In the third embodiment of the remaining hydraulic pressure prevention process, in the case where there is a record indicating that all pressure-increasing linear control valves 44 are opened once or more during the latest predetermined hydraulic control period based on the activation history of the pressure-increasing linear control valve 44, the brake ECU 100 allows the master cut valve 46 (47) to be again closed. This configuration can prevent the undesirable situation in which the master cut valve 46 (47) is repeatedly opened and closed when the pressure-increasing linear control valve 44 has jammed contaminants.
11. In the fourth embodiment of the remaining hydraulic pressure prevention process, flushing of the pressure-increasing linear control valve 44 is executed. This configuration can prevent the undesirable situation in which the master cut valve 46 (47) is repeatedly opened and closed.

While the vehicle brake control device according to the embodiments of the present invention has been described, the present invention is not limited to the above embodiments, and various modifications are possible without departing from the spirit of the invention.

For example, the present embodiments are configured such that, when the four-wheel communication mode or the partial communication mode is set, both of some of the pressure-increasing linear control valves 44 and some of the pressure-decreasing linear control valves 45 are deactivated. However, the present embodiments may be configured such that only some of the pressure-increasing linear control valves 44 are deactivated, or only some of the pressure-decreasing linear control valves 45 are deactivated.

The present embodiments are configured such that the front-rear communication passage 63 allows communication between the individual passage 43FR for the front-right wheel and the individual passage 43RL for the rear-left wheel. However, the front-rear communication passage 63 may allow communication between the individual passage 43FL for the front-left wheel and the individual passage 43RR for the rear-right wheel. In addition, two front-rear communication passages may be provided. For example, a front-rear communication passage allowing communication between the individual passage 43FL for the front-left wheel and the individual passage 43RR for the rear-right wheel may be provided in addition to the front-rear communication passage 63. The front-rear communication passage does not always have to allow communication between the wheel cylinders 82 for the diagonal wheels. The front-rear communication passage may allow communication between the wheel cylinders 82 for front-right and rear-right wheels, or may allow communication between the wheel cylinders 82 for front-left and rear-left wheels.

The present embodiments are configured to continue the four-wheel communication mode even after the brake pedal operation is canceled. However, after the brake pedal operation is canceled, energization of the front-wheel communication on-off valve 64, the rear-wheel communication on-off valve 65, and the front-rear communication on-off valve 66 may be stopped.

The present embodiments are configured to keep the master cut valves 46 and 47 closed even after the brake pedal operation is canceled. However, after the brake pedal operation is canceled, the brake control device stops the energization of the master cut valves 46 and 47 to open the master cut valves 46 and 47.

The present embodiments have three communication modes, which are the four-wheel communication mode, the partial communication mode, and the four-wheel separation mode. However, the brake control device may have two communication modes, which are the four-wheel communication mode and the four-wheel separation mode, without having the partial communication mode.

In the present embodiments, the individual linear control valve device 50 is composed of the pressure-increasing linear control valve 44 and the pressure-decreasing linear control valve 45. However, the individual linear control valve device 50 does not need to have both of the pressure-increasing linear control valve 44 and the pressure-decreasing linear control valve 45. For example, the brake control device can be configured to directly supply the hydraulic pressure outputted from the power hydraulic pressure generating device 30 without having the pressure-increasing linear control valve 44, and to adjust the wheel cylinder pressure with the pressure-decreasing linear control valve 45.

## Claims

1. A vehicle brake control device including:
wheel cylinders, each of which is provided to each of front-left, front-right, rear-left, and rear-right wheels for receiving a hydraulic pressure of operating fluid to apply braking force to the wheels;
a power hydraulic pressure generating device that generates a hydraulic pressure even if a brake operation is not performed;
individual linear control valve devices , each of which is provided to an individual passage of operating fluid leading into each of the wheel cylinders from the power hydraulic pressure generating device for independently adjusting a hydraulic pressure of each of the wheel cylinders;
a hydraulic pressure sensor that detects a hydraulic pressure of each of the wheel cylinders; and
a hydraulic control unit that controls energization of the individual linear control valve devices to control the hydraulic pressure of each of the wheel cylinders,
the brake control device comprising:
a front-wheel left-right communication passage that allows communication between the individual passage, which is located between the wheel cylinder for the front-left wheel and the individual linear control valve device, and the individual passage, which is located between the wheel cylinder for the front-right wheel and the individual linear control valve device, via a front-wheel communication on-off valve;
a rear-wheel left-right communication passage that allows communication between the individual passage, which is located between the wheel cylinder for the rear-left wheel and the individual linear control valve device, and the individual passage, which is located between the wheel cylinder for the rear-right wheel and the individual linear control valve device, via a rear-wheel communication on-off valve;
a front-rear communication passage that allows communication between the individual passage, which is located between the wheel cylinder of either one of the front-left and front-right wheels and the individual linear control valve device, and the individual passage, which is located between the wheel cylinder of either one of the rear-left and rear-right wheels and the individual linear control valve device, via a front-rear communication on-off valve; and
a communication control unit that keeps the front-wheel communication on-off valve, the rear-wheel communication on-off valve, and the front-rear communication on-off valve opened to allow the wheel cylinders for the front-left, front-right, rear-left, and rear-right wheels to be communicated with one another during a normal brake control that is a brake mode in the case where no abnormality is detected in the brake control device, and a target hydraulic pressure of the wheel cylinder for each of the front-left, front-right, rear-left, and rear-right wheels is set to be the same value.

2. A vehicle brake control device according to claim 1, wherein
the front-rear communication passage allows communication between the individual passages, each of the individual passages being located between the wheel cylinder for the wheel that is diagonal to the other wheel and the individual linear control valve device.

3. A vehicle brake control device according to claim 1 or 2, wherein
the hydraulic control unit deactivates some of the individual linear control valve devices, and activates the remaining individual linear control valve devices during the normal brake control, upon controlling the hydraulic pressure of each wheel cylinder.

4. A vehicle brake control device according to claim 3, wherein
the hydraulic control unit changes the individual linear control valve device to be activated.

5. A vehicle brake control device according to claim 4, wherein
the hydraulic control unit selects the individual linear control valve device to be activated in order that a number of activation or an activation time of each of the individual linear control valve devices is equalized.

6. A vehicle brake control device according to claim 4 or 5, further comprising:
a status determination unit that determines whether or not a driver is in a status where he/she can easily hear an operating noise generated from the individual linear control valve devices, wherein
the hydraulic control unit changes the individual linear control valve device to be activated to an individual linear control valve device that is set beforehand and that is difficult to generate an operating noise, when the status determination unit determines that the driver is in the status where he/she can easily hear the operating noise.

7. A vehicle brake control device according to any one of claims 1 to 6, wherein
the hydraulic control unit acquires a common hydraulic pressure of each wheel cylinder by using a detection value of any one or more of hydraulic pressure sensors detecting hydraulic pressures of the respective wheel cylinders, and controls the hydraulic pressure of each wheel cylinder based on the common hydraulic pressure.

8. A vehicle brake control device according to any one of claims 1 to 7, wherein
the communication control unit keeps the wheel cylinders for the front-left, front-right, rear-left, and rear-right wheels communicated with one another, when a four-wheel communication allowable condition is established, even though abnormality is detected in the brake control device.

9. A vehicle brake control device according to claim 8, wherein
the four-wheel communication allowable condition is a status in which, even when abnormality is detected in some of the individual linear control valve devices, the hydraulic pressure of each wheel cylinder can be controlled by the activation of the remaining individual linear control valve devices.

10. A vehicle brake control device according to claim 8 or 9, wherein
the four-wheel communication allowable condition is a status in which, even when abnormality is detected in some of the hydraulic pressure sensors, the common hydraulic pressure of each wheel cylinder can be detected with the remaining hydraulic pressure sensors.

11. A vehicle brake control device according to any one of claims 1 to 10, further comprising:
a master cylinder that generates a first pedal effort hydraulic pressure and a second pedal effort hydraulic pressure by using a pedal effort caused by a driver's depressing operation on a brake pedal;
a master hydraulic path including a first pedal effort hydraulic pressure path that supplies the first pedal effort hydraulic pressure to the wheel cylinder for either one of the front-left and front- right wheels, and a second pedal effort hydraulic pressure path that supplies the second pedal effort hydraulic pressure to the wheel cylinder for the other front wheel;
a master cut valve device that includes a first on-off valve opening and closing the first pedal effort hydraulic path, and a second on-off valve opening and closing the second pedal effort hydraulic path, the first on-off valve and the second on-off valve being a normally opened valve that keeps opened upon non-energization and is closed by energization; and
a master cut valve closing control unit that keeps the first on-off valve and the second on-off valve of the master cut valve device closed not only during the period in which the hydraulic control unit controls the hydraulic pressure of each wheel cylinder according to the brake pedal operation, but also during the period in which the brake pedal operation is canceled.

12. A vehicle brake control device according to claim 11, wherein
each of the individual linear control valve devices for adjusting the hydraulic pressures of the wheel cylinders for the front-left and front-right wheels include a normally closed pressure-decreasing linear control valve that is opened to allow communication between the wheel cylinder and a waste fluid path upon energization, and that keeps closed to shut off the communication upon non-energization,
each of the individual linear control valve devices for adjusting the hydraulic pressures of the wheel cylinders for the rear-left and rear-right wheels include a normally opened pressure-decreasing linear control valve that keeps opened to allow communication between the wheel cylinder and the waste fluid path upon non-energization, and that is closed to shut off the communication upon energization, and
the communication control unit keeps the wheel cylinders for the front-left, front-right, rear-left, and rear-right wheels communicated with one another, even when the brake pedal operation is canceled.

13. A vehicle brake control device according to claim 12, further comprising:
a pressure-decrease control upon pedal-cancel unit that decreases the hydraulic pressures of the wheel cylinders for the front-left and front-right wheels, when the brake pedal operation is canceled, the pressure-decrease control upon pedal-cancel unit being provided separate from the communication control unit.

14. A vehicle brake control device according to claim 13, wherein
the pressure-decrease control upon pedal-cancel unit temporarily opens at least one of the pressure-decreasing linear control valves for adjusting the hydraulic pressures of the wheel cylinders for the front-left and front-right wheels, when the brake pedal operation is canceled.

15. A vehicle brake control device according to claim 14, wherein
the pressure-decrease control upon pedal-cancel unit alternately opens the pressure-decreasing linear control valve for adjusting the hydraulic pressure of the wheel cylinder for the front-left wheel and the pressure-decreasing linear control valve for adjusting the hydraulic pressure of the wheel cylinder for the front-right wheel.

16. A vehicle brake control device according to claim 14 or 15, wherein
the pressure-decrease control upon pedal-cancel unit estimates the temperature of the pressure-decreasing linear control valve that is opened, and when the estimated temperature exceeds an overheat prevention threshold value, the pressure-decrease control upon pedal-cancel unit takes priority over the master cut valve closing control unit to open at least one of on-off valves of the master cut valve device.

17. A vehicle brake control device according to any one of claims 13 to 16 further comprising:
a remaining hydraulic pressure state detection unit that detects a remaining hydraulic pressure state that is a state in which the hydraulic pressures of the wheel cylinders for the front-left and front-right wheels are not reduced to a predetermined hydraulic pressure after the brake pedal operation is canceled, wherein
the pressure-decrease control upon pedal-cancel unit decreases the hydraulic pressures of the wheel cylinders for the front-left and front-right wheels when the remaining hydraulic pressure state is detected.

18. A vehicle brake control device according to claim 17, wherein
the pressure-decrease control upon pedal-cancel unit takes priority over the master cut valve closing control unit to open at least one of on-off valves of the master cut valve device, when the remaining hydraulic pressure state is detected.

19. A vehicle brake control device according to claim 18, further comprising:
an activation history acquiring unit that acquires an activation history of a pressure-increasing linear control valve provided to at least the individual linear control valve devices for adjusting the hydraulic pressures of the wheel cylinders for the front-left and front-right wheels during the hydraulic control; and
a master cut valve close allowance unit that allows a close-state keeping operation of the master cut valve device by the master cut valve closing control unit, if it is the condition in which the pressure-increasing linear control valve is opened once or more during the last predetermined hydraulic pressure control period based on the activation history of the pressure-increasing linear control valve, when at least one of the on-off valves of the master cut valve device is opened by the pressure-decrease control upon pedal-cancel unit.

20. A vehicle brake control device according to claim 18, further comprising:
a contaminant removal control unit that opens the pressure-increasing linear control valve provided to at least the individual linear control valve device for adjusting the hydraulic pressures of the wheel cylinders for the front-left and front-right wheels for a preset short period for removing contaminants, when the brake pedal operation is canceled.
